(19) Europäisches Patentamt
European Patent Office
Office européen des brevets

(11) **EP 4 043 528 A1**

(12) **EUROPEAN PATENT APPLICATION**
published in accordance with Art. 153(4) EPC

(43) Date of publication:
**17.08.2022 Bulletin 2022/33**

(21) Application number: **20871976.5**

(22) Date of filing: **29.09.2020**

(51) International Patent Classification (IPC):
**C09D 5/28** (2006.01)      **C09D 5/16** (2006.01)
**C09D 175/14** (2006.01)    **B05D 3/06** (2006.01)
**B44C 5/04** (2006.01)      **B44C 1/00** (2006.01)

(52) Cooperative Patent Classification (CPC):
**B05D 3/06; B44C 1/00; B44C 5/04; C09D 5/16;
C09D 5/28; C09D 175/14**

(86) International application number:
**PCT/KR2020/013287**

(87) International publication number:
**WO 2021/066496 (08.04.2021 Gazette 2021/14)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **02.10.2019 KR 20190122102
08.10.2019 KR 20190124705
23.09.2020 KR 20200122770
23.09.2020 KR 20200122771**

(71) Applicant: **LX Hausys, Ltd.
Jung-gu
Seoul
04637 (KR)**

(72) Inventors:
• **KIM, Da Sol
  Seoul 07796 (KR)**
• **LEE, Bo Bin
  Seoul 07796 (KR)**
• **CHOI, Tae Yi
  Seoul 07796 (KR)**

(74) Representative: **Eisenführ Speiser
Patentanwälte Rechtsanwälte PartGmbB
Postfach 10 60 78
28060 Bremen (DE)**

(54) **LAMINATE FILM HAVING WRINKLED SURFACE**

(57)      The present application relates to a laminate film which can be used in furniture or a decoration material. The laminate film is excellent in terms of both elongation rate and surface hardness, between which there has been a trade-off relationship according to the prior art, and has soft tactility and matt characteristics, and excellent fouling resistance. In particular, said surface characteristics can be retained even after the laminate film is elongated.

LGHAUSYS 5.0kV 8.0mm x200 LM(L)                    200um
Fig. 1

EP 4 043 528 A1

**Description**

[Technical Field]

The present application relates to a laminate film having a wrinkled surface. Particularly, the present application relates to a laminate film having an improved trade-off relationship between an elongation rate and a surface hardness. In addition, the present application relates to a laminate film having excellent fouling resistance, an excellent matte characteristic and an excellent tactile texture, in which the laminate film of the present application may maintain the above characteristics even after a tensile force is applied.

[Technical Field]

A decorative sheet with a matte characteristic (or a low gloss characteristic) has been widely used in the manufacture of interior materials for buildings or films for furniture. For example, a technique for manufacturing a decorative sheet with a matte characteristic by applying a coating agent containing a matting agent (e.g., silica) on a base and curing the resulting base is used.

The surface of a decorative sheet formed by the coating agent requires excellent surface hardness as well as high durability. At the same time, the decorative sheet should also have flexibility, considering when it is applied to furniture or the like. However, when the surface hardness is excellent, the flexibility is generally low. In addition, when a tensile force is applied to the sheet, the physical properties of the sheet prior to stretching are also changed.

However, since surface hardness that indicates coating hardness and an elongation rate that indicates how flexible the coating is are in a trade-off relationship, it is not easy to provide a decorative sheet that satisfies both properties.

Meanwhile, regarding the realization of the matte characteristic of the decorative sheet, because a general matting agent is porous and has low apparent specific gravity, as it is located on a coated surface, the surface adsorption of impurities (e.g., fine dust, moisture, oil, etc.) is increased, even resulting in the deterioration of the fouling resistance of the decorative sheet.

In addition, recently, in line with the high-end trend of decorative sheets, the demand for decorative sheets with a soft surface as well as the matte characteristic is also increasing.

Therefore, there is a demand for developing a decorative sheet that is able to have the same or higher fouling resistance than that of a conventional product, realize an excellent texture and an excellent matte characteristic, and maintain these properties even when a tensile force for processing is applied in an actual use.

In addition, there is a need for technology that is able to satisfy both an elongation rate and hardness, which are suitable for use, and realize a matte characteristic without deteriorating fouling resistance, compared to a conventional product.

[Disclosure]

[Technical Problem]

The present application is directed to resolving the above-described problems of the related art.

The present application is also directed to providing a laminate film that has both an excellent elongation rate and excellent surface hardness, which are in a trade-off relationship.

The present application is also directed to providing a film that not only has excellent surface properties such as a texture, a matte characteristic and fouling resistance, but also maintains the surface properties even when tensile force is applied.

The above-described objects of the present application and other objects may all be achieved by the present application described in detail below.

[Technical Solution]

One aspect of the present application provides a laminate film which includes a base layer and a cured layer.

In one embodiment, the laminate film includes a base layer; and a cured layer located on at least one surface of the base layer and having a wrinkled surface, wherein the roughness (Rzl) of the surface of the cured layer is in the range of 3.5 to 10.0 $\mu$m and a 60° gloss (G1) is 4.0 to 6.0; after the film is left for 1 minute at 80 °C and stretched 14% at 100 mm/min, the roughness (Rz2) of the surface of the cured layer is in the range of 3.0 to 10.0 $\mu$m and a 60° gloss (G2) is 4.0 to 6.0; and the surface roughness decrease rate of the cured layer is 15% or less, calculated by the following Equation 1 after stretching.

[Equation 1]

$$\text{Surface roughness decrease rate (\%)} = \{(Rz1 - Rz2) \times 100\}/Rz1$$

The gloss increase rate of the cured layer calculated by Equation 2 below after stretching is 15% or less.

[Equation 2]

$$\text{Gloss increase rate (\%)} = \{(G2 - G1) \times 100\}/G1$$

(G2 is a 60° gloss after stretching.)

The cured layer has a wrinkled surface. The wrinkled surface is a surface opposite to the surface of the cured layer facing the base layer. The wrinkled surface may impart predetermined surface properties (e.g., surface hardness, gloss, and elongation rate) to be described below to the laminate film.

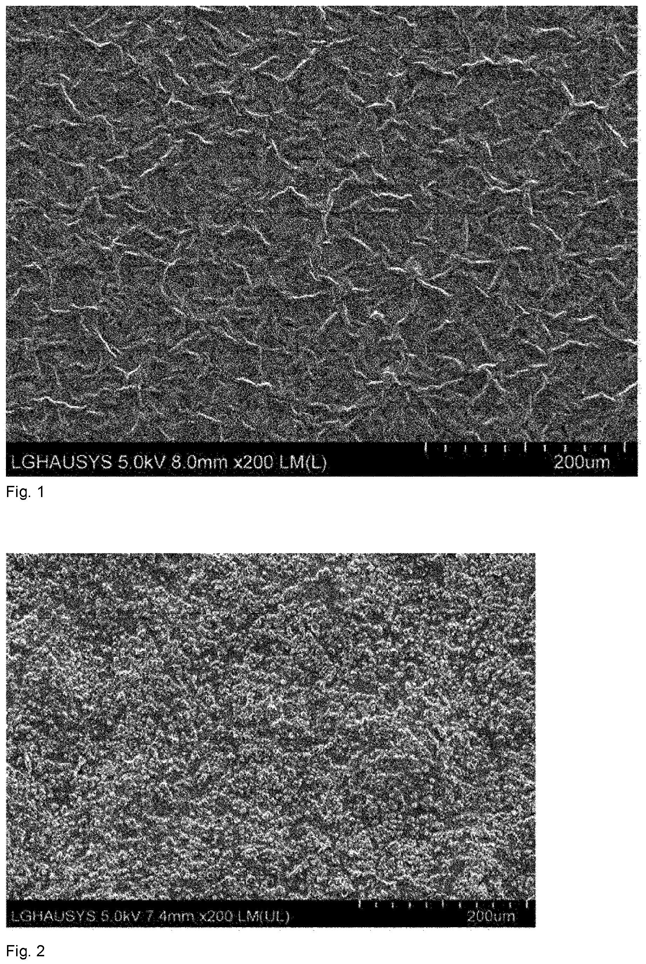

The "wrinkled surface" (hereinafter, represented by surface (Swrinkle)) of the present application includes at least one surface of the cured layer with wrinkles, resulting in three-dimensional surface irregularities (see FIG. 1). For example, the surface (Swrinkle) has irregularities with large and small ridges and valleys, and wrinkles that are formed from these to be visually recognized in a predetermined shape. The ridges, valleys and wrinkles may have regular or irregular shapes, respectively. Such a wrinkled surface may be referred to as a surface having a fine folding structure.

When the surface (Swrinkle) of the cured layer with wrinkles is observed in the normal direction of the cured layer, ridges, valleys, wrinkles and irregularities formed therefrom undergo, for example, a curing process to be described below and are observed over the entire area of the surface (Swrinkle). The observation of wrinkles or surface irregularities described in the present application in the entire region of the surface of the cured layer may be expressed as satisfying the surface properties described below (e.g., the maintenance of a matte characteristic, surface roughness, and fouling resistance after stretching).

The wrinkles may be observed in a line shape (e.g., straight or curved) with directionality. In one example, the wrinkles on the surface formed by repeating straight and curved shapes may give a curve like a mountain range shape on the surface of the cured layer.

The surface irregularity structure formed by the wrinkles having a line shape as described above is clearly distinct from a so-called point-wise irregularity shape (see FIG. 2) formed by a method using particles in a composition for forming a cured layer or a method using an emulsion dispersion.

In one example, the surface (Swrinkle) may include wrinkles (Wa) that can be visually recognized in a predetermined size and shape. Specifically, the wrinkles may have a width of several hundreds of nm to several to tens of $\mu$m, and a line (straight or curved) shape in a length ranging from several to several hundreds of $\mu$m.

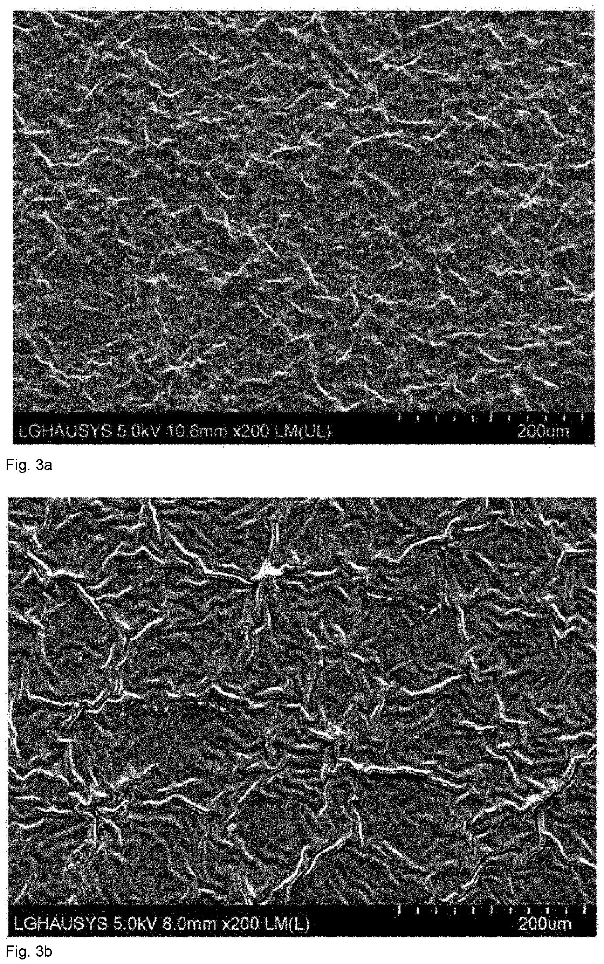

The width of the wrinkle and the length of the extending wrinkle may be confirmed from a photograph (e.g., SEM) of a wrinkled surface in the accompanying drawings. Here, the length in the extension direction is larger than the width (see FIG. 3).

Specifically, the end of the wrinkle (Wa) extending in a straight or curved shape may be incorporated into the cured layer while forming an inclination in which the height gradually decreases. In some cases, the end of any one wrinkle (Wa) with the above-described size and shape may be the starting point of another wrinkle or a connective part of another wrinkle. In addition, when the cross-sectional curve near a wrinkle is observed in a direction perpendicular to the extension direction of the wrinkle (Wa), the width of the wrinkle may be incorporated into the cured layer while forming an inclination in which the height gradually decreases in both directions based on a point or part (e.g., ridge) forming the height of the wrinkle. Meanwhile, when a ridge and a valley adjacent thereto form a wrinkle or a part thereof, the region in a shape that has the valley may be viewed as the width of the wrinkle (Wa).

In one example, the width of the wrinkle (Wa) may be 20 $\mu$m or less, 15 $\mu$m or less, 10 $\mu$m or less, or 5 $\mu$m or less. In an embodiment, the upper limit of the width of the wrinkle may be, for example, 1 $\mu$m or less. In addition, the lower limit of the width of the wrinkle (Wa) may be, for example, 150 nm or more, 200 nm or more, 250 nm or more, or 300 nm or more, 400 nm or more, or 500 nm or more, and specifically, for example, 1 $\mu$m or more, 2 $\mu$m or more, or 3 $\mu$m or more. When the above ranges are satisfied, the surface formed by the wrinkles may be advantageous for having specific properties desired in the present application.

In one example, the extending length of the wrinkle (Wa) may be 5 $\mu$m or more or 10 $\mu$m or more, and specifically, for example, 20 $\mu$m or more, 30 $\mu$m or more, 40 $\mu$m or more, 50 $\mu$m or more, 60 $\mu$m or more, 70 $\mu$m or more, 80 $\mu$m or more, 90 $\mu$m or more, or 100 $\mu$m or more. In addition, the upper limit may be, for example, 500 $\mu$m or less, 450 $\mu$m or less, 400 $\mu$m or less, 350 $\mu$m or less, 300 $\mu$m or less, 250 $\mu$m or less, 200 $\mu$m or less, or 100 $\mu$m or less, and more specifically, 90 $\mu$m or less, 80 $\mu$m or less, 70 $\mu$m or less, 60 $\mu$m or less, or 50 $\mu$m or less. When the above ranges are satisfied, the surface formed by the wrinkles may be advantageous for having specific properties desired in the present application.

The wrinkle (Wa) may have a predetermined height in most of its extending length. For example, the wrinkle (Wa) may have a height of 1 μm or more. Specifically, when the cross-sectional curve of the wrinkles is observed in a direction perpendicular to the extension direction of the wrinkles, the point or part (e.g., ridge) forming the height of the wrinkle and the point or part (e.g., valley) of the cured layer into which the width of the wrinkle is incorporated may have a height difference of at least 1 μm or more. Here, most of the length at which the above-mentioned height is observed means a length of the wrinkle (Wa), which is 70% or more, 75% or more, 80% or more, 85% or more, or 90% or more or 95% or more of a length continuously extending along its shape. When a height difference gradually decreases in the extension direction of the wrinkle, and thus the height is 1 μm or less or less than 1 μm, a shape in which the end of the wrinkle is incorporated into the cured layer may be observed, or a shape in which a contact point with another wrinkle different from the wrinkle (Wa) in size or shape starts may be observed. In the latter case, a more complicated wrinkle structure may form an uneven surface (Swrinkle).

The wrinkle (Wa) may be observed throughout the entire region, and form surface wrinkles or irregularities while showing a regular or irregular distribution. The observation of the wrinkles or surface irregularities described in the present application over the entire area of the surface of the cured layer may be expressed as satisfying the matte characteristic, surface hardness and elongation rate, which will be described below.

For example, on the surface (Swrinkle), surface irregularities may be formed while having a shape in which a plurality of the wrinkles (Wa) are branched in different directions from one specific point.

For example, on the surface (Swrinkle), the wrinkles (Wa) may have a shape similar to "Y" or " <" (that is, the wrinkles may be visually recognized in a shape similar to "Y" or " <"). Here, the wrinkles having a shape similar to "Y" or " <" may be densely arranged, thereby forming surface irregularities.

For example, on the surface (Swrinkle), surface irregularities may be formed in the form in which the wrinkles (Wa) are distributed by generally extending in one direction while branching in different directions is inhibited.

The shape and arrangement of the wrinkles (Wa) forming such surface irregularities are exemplary. In addition, on the uneven surface (Swrinkle), one or more wrinkles with the above-described shape or form may be observed.

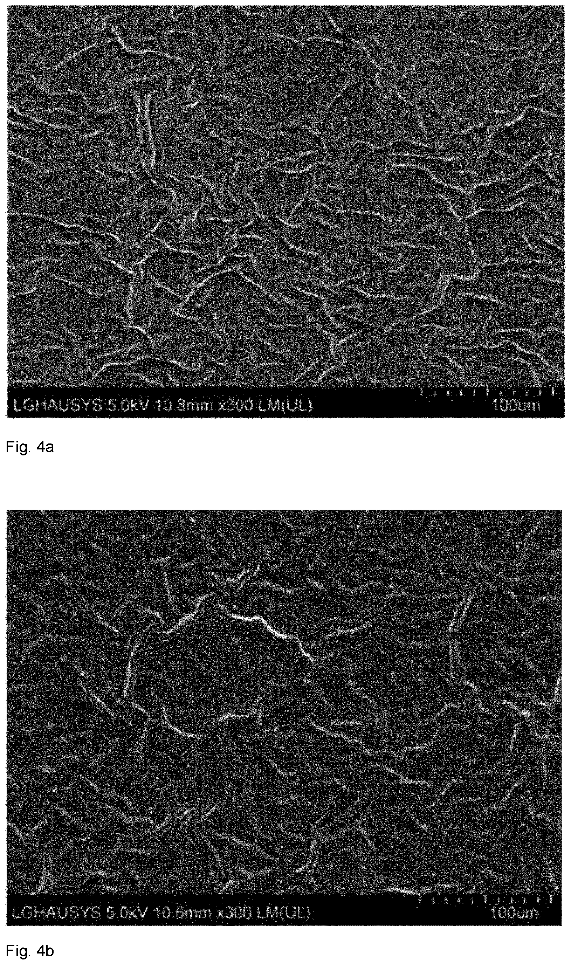

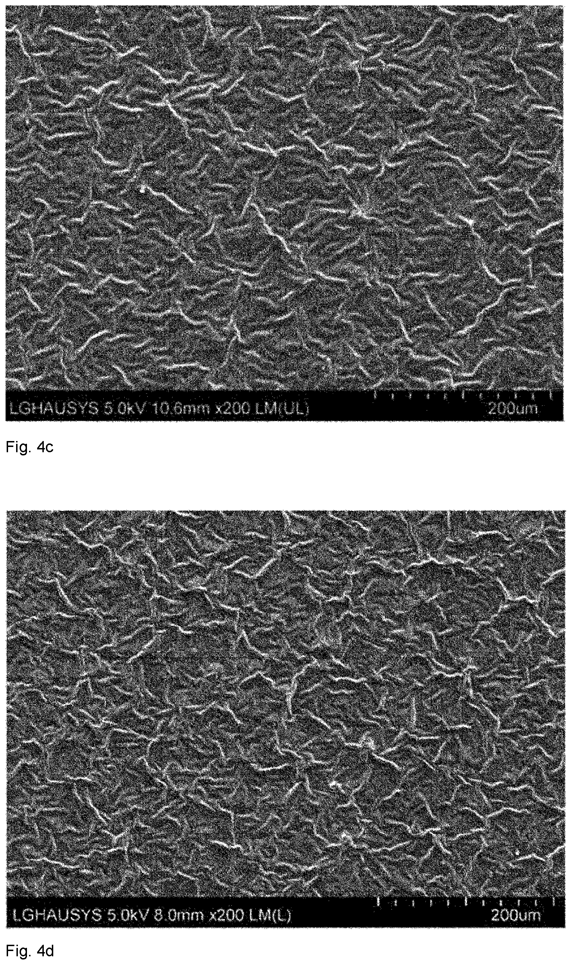

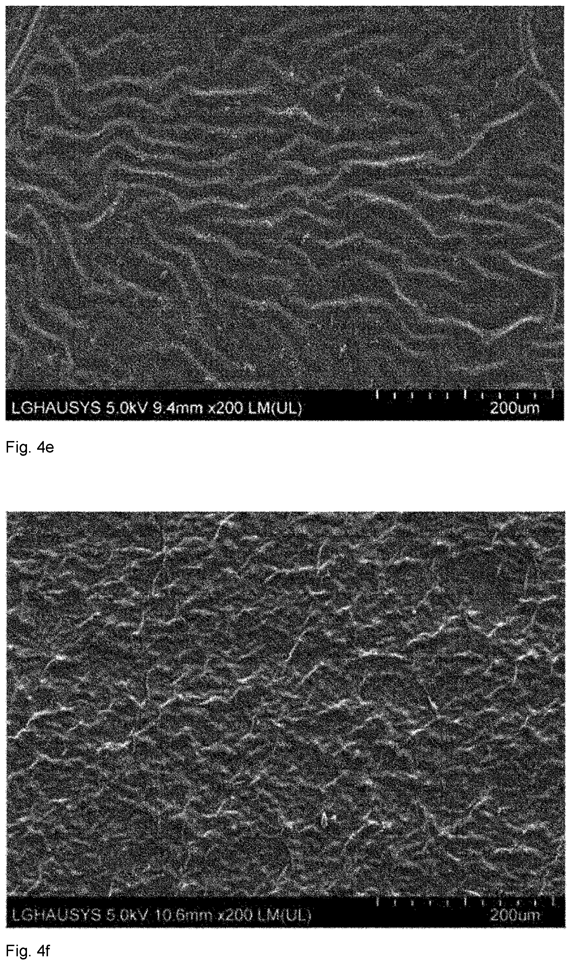

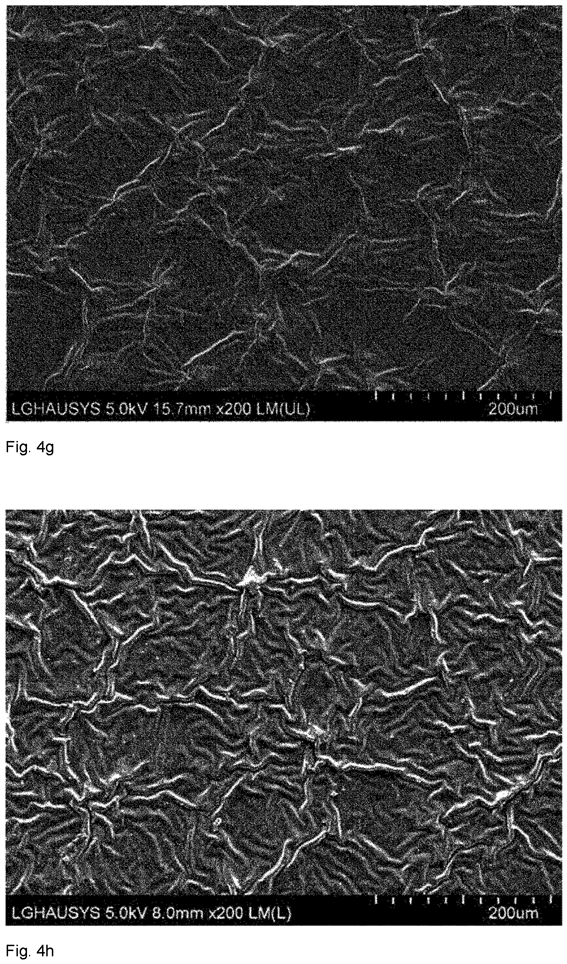

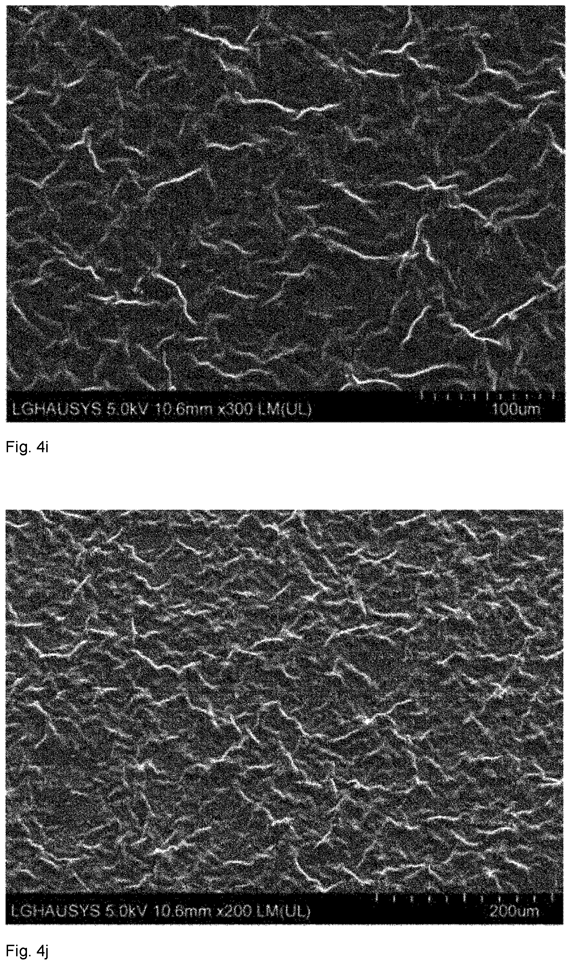

Examples of the above-described shapes of the surface wrinkles may be confirmed in FIGS. 1, 3, 4 and 5.

In one example, the surface (Swrinkle) may include wrinkles (Wb) with a different size and/or shape from the wrinkles (Wa). For example, a wrinkle that does not satisfy one or more of the width, length and height of the wrinkle (Wa) may be referred to as a wrinkle (Wb). Preferably, a case where one or more of a width, length and height are different from those of the above-specified wrinkle (Wa) may be defined as the wrinkle (Wb). When larger wrinkles than the wrinkles (Wa) are observed in large quantities on the surface, it may be an obstacle to securing surface properties.

In one example, the wrinkles (Wb) may be observed over the entire area of the surface (Swrinkle), and surface irregularities may be formed while showing a regular or irregular distribution. The observation of the wrinkles or surface irregularities described in the present application in the entire region of the surface of the cured layer may be expressed as satisfying a matte characteristic, surface hardness and an elongation rate, which are described below.

For example, on the surface (Swrinkle), surface irregularities may be formed while having a shape in which a plurality of the wrinkles (Wb) are branched in different directions from one specific point.

For example, on the surface (Swrinkle), the wrinkles (Wb) may have a shape similar to "Y" or " <" (that is, the wrinkles may be visually recognized in a shape similar to "Y" or " <"). Here, the wrinkles having a shape similar to "Y" or " <" may be densely arranged, thereby forming surface irregularities.

For example, on the surface (Swrinkle), surface irregularities may be formed in the form in which the wrinkles (Wb) are distributed by generally extending in one direction while branching in different directions is inhibited.

The shape and arrangement of the wrinkles (Wb) forming such surface irregularities are exemplary. In addition, on the uneven surface (Swrinkle), one or more wrinkles with the above-described shape or form may be observed.

Examples of the above-described shapes of the surface wrinkles may be confirmed in FIGS. 1, 3, 4 and 5.

In one example, the irregularities of the surface (Swrinkle) may be formed by the wrinkles (Wa and Wb).

In one example, the surface of the cured layer may be formed while the wrinkle (Wb) is adjacent to the wrinkle (Wa). For example, when the surface (Swrinkle) is observed in the normal direction of the cured layer, there may be a valley or a ridge between the wrinkles (Wa and Wb).

In another example, the wrinkle (Wb) may have a state of being physically connected with the wrinkle (Wa), for example, a shape or form in which a wrinkle (Wb) with a low height or small width is branched from the wrinkle (Wa), and these wrinkles (Wa and Wb) may form the surface (Swrinkle) of the cured layer. The direction or length of the wrinkle (Wb) branched from the wrinkle (Wa) is not particularly limited.

Examples of the above-described shapes of the surface wrinkles may be confirmed in FIGS. 1, 3, 4 and 5.

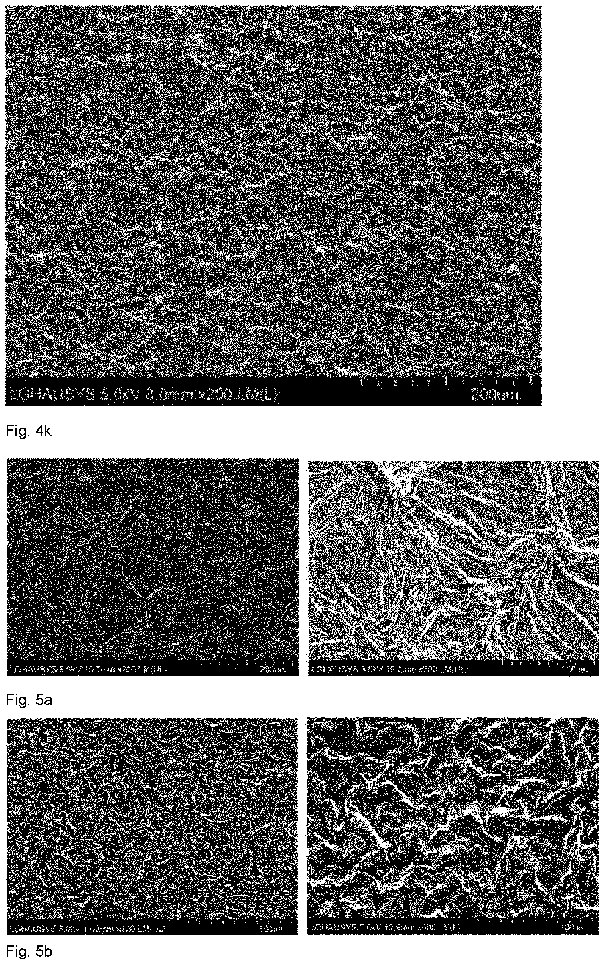

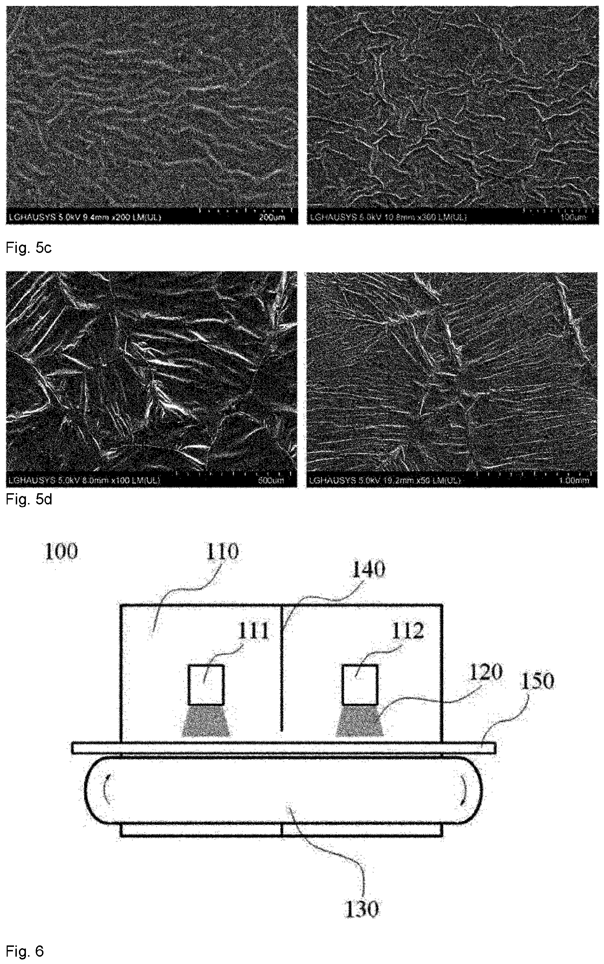

In one example, the wrinkle shapes on the surface of the cured layer may be a shape the same as or similar to that shown in FIG. 5. For example, the surface of the cured layer may be a surface on which only any one of wrinkles with a specific shape, which will be described later, is observed, or a surface on which two or more of wrinkles with a specific shape, which will be described later, are observed at the same time, otherwise, it may be a surface on which wrinkles of other shapes (to a level not impairing a desired surface property) are observed in addition to wrinkles of a specific shape illustrated below.

For example, the surface may be a radially wrinkled surface (see FIG. 5A). The radial shape may be a shape in which a plurality of wrinkles having the same or different directionality extend from any point (the center). The radially-formed wrinkles may include wrinkles (Wa). In addition, the radially-formed wrinkles may include wrinkles (Wb). These wrinkles may be observed over the entire area of the surface of the cured layer, and for example, may be distributed on the surface to the extent that can satisfy the following surface properties through the curing process to be described below. In addition, in some cases, wrinkles directionally extending from the center may have a shape in which the height of the wrinkle gradually decreases as they move away from the center.

For example, the surface may be a Y-type (or Y-tile patterned) wrinkled surface (see FIG. 5B). The Y type may be a shape in which a plurality of wrinkles having three different directionalities from any point (the center) extend. In the case of the Y type, when observing the surface of the cured layer, it is sufficient that the Y-shaped curve is generally observed in most of the surface area, and it is not necessary to have a shape in which three wrinkles with directionality extend from any point such that only a curve with an exact Y shape is observed. The Y-type wrinkles may include a wrinkle (Wa). In addition, the Y-type wrinkles may include a wrinkle (Wb). Such wrinkles may be observed over the entire area of the surface of the cured layer, and for example, may be distributed on the surface to the extent that the following surface properties are satisfied throughout a curing process to be described later. In addition, in some cases, wrinkles directionally extending from the center may have a shape in which the height gradually decreases as they move away from the center.

For example, the surface may be a sand wave-type wrinkled surface (see FIG. 5C). Compared to other types of surface wrinkles, the sand wave-type wrinkles have a lower depth and are more evenly distributed. The sand wave-type wrinkles may include wrinkles (Wa). In addition, the sand wave-type wrinkles may include wrinkles (Wb). Such wrinkles may be observed over the entire region of the surface of the cured layer, and for example, may be distributed on the surface to the extent that they can satisfy the following surface properties through a curing process to be described below.

For example, the surface may be a tensioned-web type wrinkled surface (see FIG. 5D). The tensioned-web type has wrinkles formed to be arranged in substantially the same direction, and may be a shape like a web formed by other wrinkles (may also be arranged substantially in the same direction) arranged in an intersecting direction with respect to them. Here, an intersecting angle is not particularly limited. The tensioned-web type may be recognized as wrinkles formed to be generally arranged in one direction, which are distributed over the entire area of the surface. The tensioned-web type wrinkles may include wrinkles (Wa). In addition, the tensioned-web type wrinkles may include wrinkles (Wb). Such wrinkles may be observed over the entire area of the surface of the cured layer, and for example, may be distributed on the surface to the extent that they can they can satisfy the following surface properties through a curing process to be described below.

In one example, the surface may have irregularities formed by randomly distributing radially-formed or Y-type wrinkle structures.

As described above, the laminate film of the present application includes a cured layer with a wrinkled surface (Swrinkle), and has an excellent elongation rate and excellent surface hardness in addition to predetermined surface properties.

Specifically, the film may have a surface hardness of 0.3 N or more, and an elongation rate of 15% or more, which are measured for the wrinkled surface of the cured layer.

The "surface hardness" used herein may be measured according to ISO 4586-2, as described in the following examples. The surface hardness is a numerical value associated with the durability of a film, indicating the hardness of a surface.

The "elongation rate" used herein may be measured according to ASTM D638, as described in the following examples. The elongation rate is a numerical value associated with the moldability, processability or flexibility of a film.

In one example, the surface hardness may be 0.31 N or more, 0.32 N or more, 0.33 N or more, 0.34 N or more, 0.35 N or more, 0.36 N or more, 0.37 N or more, 0.38 N or more, 0.39 N or more, or 0.40 N or more. The upper limit is not particularly limited, and may be, for example, 0.50 N or less. When the surface hardness of the film is satisfied, a laminate film having excellent mechanical properties and durability may be provided.

A film with a high surface hardness is generally known to have a poor elongation rate. However, in the present application, a laminate film having a high surface hardness and an excellent elongation rate may be ensured through predetermined treatment of a composition to be described below.

In one example, the elongation rate may be 16% or more, 17% or more, 18% or more, 19% or more, 20% or more, 21% or more, 22% or more, 23% or more, 24% or more, or 25% or more. The upper limit is not particularly limited, and may be, for example, 35% or less, or 30% or less. When the elongation rate in the above range is satisfied, it is advantageous in ensuring the moldability of the film.

In addition, the film of the present application may be a film having a so-called matte characteristic. The laminate film having a matte characteristic may provide a beautiful aesthetic feeling to a user.

In one example, the surface of the cured layer may be a laminate film having a 60° gloss (G) of 4.0 to 6.0.

The "60° gloss (G)" used herein is a numerical value (GU: gloss unit) expressing the degree of surface gloss, measured using a gloss meter according to ASTM D2457. It can be seen that the lower the gloss, the closer to matte.

Specifically, the 60° gloss (G) of the wrinkled surface of the cured layer may be 5.5 or less, or 5.0 or less. The lower limit of the 60° gloss (G) may be, but is not particularly limited to, for example, 3.0 or more, or 3.5 or more. When the surface of the cured layer of the film has the above range of 60° gloss (G), a beautiful matte characteristic may be provided to a user.

In another example, the surface roughness (Rz) of the cured layer may be in a range of 3.0 to 10 $\mu$m.

The "surface roughness (Rz)" used herein is a numerical value expressing the degree of irregularity, which may be measured according to ISO 4281. Specifically, the surface roughness (Rz) may be referred to as a ten-point average roughness. Specifically, the surface roughness shows the deviation obtained by taking the reference length (L) as the cross-sectional curve of the surface of the cured layer, and measuring the distances between five highest peaks (ridges) and the five deepest alleys (valleys) of a profile with a straight line that does not cut the cross-sectional curve parallel to the average line of the part. Here, the reference length (L) may be a several mm level, for example, in a range of approximately 0.1 to 1 mm, and specifically, approximately 0.8 mm.

Specifically, the surface roughness (Rz) of the cured layer may be 3.1 $\mu$m or more, 3.2 $\mu$m or more, 3.3 $\mu$m or more, 3.4 $\mu$m or more, 3.5 $\mu$m or more, 3.6 $\mu$m or more, 3.7 $\mu$m or more, 3.8 $\mu$m or more, 3.9 $\mu$m or more, 4.0 $\mu$m or more, 4.1 $\mu$m or more, 4.2 $\mu$m or more, 4.3 $\mu$m or more, 4.4 $\mu$m or more, or 4.5 $\mu$m or more. In addition, the upper limit of the surface roughness may be, for example, 9.5 $\mu$m or less, 9.0 $\mu$m or less, 8.5 $\mu$m or less, 8.0 $\mu$m or less, 7.5 $\mu$m or less, 7.0 $\mu$m or less, 6.5 $\mu$m or less, 6.0 $\mu$m or less, 5.5 $\mu$m or less, or 5.0 $\mu$m or less. When the surface of the cured layer of a film has the above range of surface roughness (Rz), the fouling resistance of a film like preventing contaminants generated by a user's touch or external factors from being attached to a surface may be improved by reducing a surface contact area.

In addition, the wrinkled surface of the cured layer has a surface roughness (Rzl) of 3.5 to 10.0 $\mu$m, and a 60° gloss (G1) of 4 to 6. The surface roughness (Rzl) means a surface roughness (Rz) measured on a wrinkled surface prior to stretching of a film to be described below. In addition, the 60° gloss (G1) means a 60° gloss (G) measured on a wrinkled surface prior to stretching of a film to be described below.

The "surface roughness (Rz)" used herein may be measured according to ISO 4281, and may also be referred to as a ten-point average roughness. Specifically, the surface roughness shows the deviation obtained by taking the reference length (L) as the cross-sectional curve of the surface of the cured layer, and measuring the distances between five highest-profile peaks (ridges) and the five deepest valleys (valleys) of a profile with a straight line that does not cut the cross-sectional curve parallel to the average line of the part, and is a numerical value expressing the degree of irregularity. Here, the reference length (L) may be a several mm level, for example, in a range of approximately 0.1 to 1 mm, and specifically, approximately 0.8 mm.

The "60° gloss (G)" used herein is a numerical value (GU: gloss unit) expressing the degree of surface gloss, which can be measured using a gloss meter according to ASTM D2457. It can be seen that the lower the gloss, the closer to matte.

In one example, the surface roughness (Rzl) of the wrinkled surface of the cured layer may be 3.6 $\mu$m or more, 3.7 $\mu$m or more, 3.8 $\mu$m or more, 3.9 $\mu$m or more, 4.0 $\mu$m or more, 4.1 $\mu$m or more, 4.2 $\mu$m or more, 4.3 $\mu$m or more, 4.4 $\mu$m or more, or 4.5 $\mu$m or more. In addition, the upper limit of the surface roughness may be, for example, 9.5 $\mu$m or less, 9.0 $\mu$m or less, 8.5 $\mu$m or less, 8.0 $\mu$m or less, 7.5 $\mu$m or less, 7.0 $\mu$m or less, 6.5 $\mu$m or less, 6.0 $\mu$m or less, 5.5 $\mu$m or less, or 5.0 $\mu$m or less. When the surface satisfies the above-described surface roughness, it is advantageous in ensuring a required matte characteristic.

In one example, the 60° gloss (G1) of the wrinkled surface of the cured layer may be 4.1 or more, 4.2 or more, 4.3 or more, 4.4 or more, 4.5 or more, 4.6 or more, 4.7 or more, 4.8 or more, 4.9 or more, or 5.0 or more. In addition, the upper limit of the 60° gloss (G1) may be, for example, 5.9 or less, 5.8 or less, 5.6 or less, or 5.5 or less. When the surface of the cured layer of a film has the above range of 60° gloss (G1), a beautiful matte characteristic may be provided to a user.

A film of the present application may satisfy the above-described ranges of surface roughness and gloss even after a tensile force is applied. That is, the film may maintain a soft texture, excellent fouling resistance, and a beautifully matte characteristic even after undergoing a stretching process. Such properties may be ensured by curing performed in predetermined steps for a composition having a predetermined composition. The specific composition and curing process of the composition will be described below.

Specifically, the laminate film may satisfy a surface roughness (Rz2) of the cured layer measured after stretching of 3.0 to 10, or a gloss (G2) of 4.0 to 6.0.

In this regard, the stretching may be performed by leaving the laminate film for 5 minutes or less in a range of 70 to 90 °C and stretching it to 20% or less. Specifically, the temperature at which the film is left may be 75 °C to 85 °C, and specifically, approximately 80 °C, and the time for leaving the film at the above-mentioned temperature may be 4 minutes or less, 3 minutes or less, or 2 minutes or less, and specifically, approximately 1 minute. In addition, the stretching of the film may be performed by operating a tensioner so that the film cut to a predetermined size can be stretched to 20% or less in length in a longitudinal direction, that is, have an elongation rate of 20% or less, as described in the following example. The elongation rate may be, for example, 19% or less, 18% or less, 17% or less, 16% or less, or 15% or less. The lower limit of the stretching degree may be, but is not particularly limited to, for example, 5% or more, or 10% or more. The stretching is preferably performed 14% at 100 mm/min after leaving for 1 minute at 80 °C.

In one example, the laminate film may satisfy a surface roughness (Rz2) of the surface of the cured layer measured after stretching of 3 to 10 $\mu$m, as described above.

When stretching is performed, surface irregularities may be reduced (that is, wrinkles may be smoothed), as a result, it can be expected that surface roughness may be reduced compared to before stretching. However, in the present application, even when the above-described stretching is performed, the surface roughness may not be greatly lowered or maintained at an equal level compared to before stretching. This is thought to be because the cured layer formed through the following composition and process has a dense surface and thus the degree of change due to an ambient stimulus (e.g., tensile force) is low. Accordingly, even after stretching, the laminate film of the present application may have the soft texture and fouling resistance, which have been ensured before stretching, at equal levels.

For example, after the stretching, the surface roughness (Rz2) of the surface of the cured layer may be 3.1 $\mu$m or more, 3.2 $\mu$m or more, 3.3 $\mu$m or more, 3.4 $\mu$m or more, or 3.5 $\mu$m or more. In addition, the upper limit of the surface roughness (Rz2) may be, for example, 9.5 $\mu$m or less, 9.0 $\mu$m or less, 8.5 $\mu$m or less, 8.0 $\mu$m or less, 7.5 $\mu$m or less, 7.0 $\mu$m or less, 6.5 $\mu$m or less, 6.0 $\mu$m or less, 5.5 $\mu$m or less, or 5.0 $\mu$m or less.

In one example, the film may satisfy a surface gloss (G2) of the cured layer of 4.0 to 6.0, measured after stretching as described above.

When stretching is performed, surface irregularities may be reduced (that is, wrinkles may be smoothed), as a result, it can be expected that, compared to before stretching, the gloss increases while the matte effect caused by wrinkles decreases. However, in the present application, even when the stretching is performed as described above, compared to before stretching, gloss may not greatly increase or may be maintained at an equal level. This is thought to be because the cured layer formed through the following composition and process has a dense surface and thus the degree of change due to an ambient stimulus (e.g., tensile force) is low. Accordingly, even after stretching, the laminate film of the present application may maintain the matte characteristic, which has been ensured before stretching, at an equal level.

For example, after stretching, the 60° gloss (G2) of the surface of the cured layer may be 4.1 or more, 4.2 or more, 4.3 or more, 4.4 or more, 4.5 or more, 4.6 or more, 4.7 or more, 4.8 or more, 4.9 or more, or 5.0 or more. In addition, the upper limit of the 60° gloss (G2) may be, for example, 5.9 or less, 5.8 or less, 5.6 or less, or 5.5 or less.

In one example, the laminate film may satisfy a surface roughness (Rz2) of the cured layer of 3 to 10 $\mu$m, measured after stretching, and a gloss (G2) of 4.0 to 6.0.

In another example, the laminate film may satisfy a surface roughness (Rz2) of the cured layer of 3 to 5 $\mu$m, measured after stretching, and a gloss (G2) of 4.0 to 5.0.

In one example, the laminate film may satisfy a surface roughness decrease rate (%) of the cured layer of 15% or less, after stretching of the film. The surface roughness decrease rate (%) of the cured layer may be obtained by the following Equation 1.

[Equation 1]

$$\text{Surface roughness decrease rate (\%)} = \{(Rz1 - Rz2) \times 100\}/Rz1$$

In Equation 1, Rz1 is a surface roughness (Rz) of the cured layer before stretching, and Rz2 is a surface roughness (Rz) of the cured layer after stretching. Here, Rz1 and Rz2 may have the above-mentioned ranges, respectively.

The surface roughness decrease rate may be, for example, 14% or less, 13% or less, 12% or less, 11% or less, or 10% or less, and the lower limit thereof may be, for example, 0.1% or more, 1% or more, or 5% or more.

A film satisfying the surface roughness decrease rate (%) as described above may maintain the effects caused by the ensured surface roughness even after stretching.

In one example, after stretching, the film may satisfy a 60° gloss increase rate (%) of 15% or less after stretching of the film. The 60° gloss (G) increase rate of the cured layer may be obtained by the following Equation 2.

[Equation 2]

$$60° \text{ Gloss increase rate (\%)} = \{(G2 - G1) \times 100\}/G1$$

In Equation 1, G1 is a 60° gloss (G) of the cured layer before stretching, and G2 is a 60° gloss (G) of the cured layer after stretching. Here, G1 and G2 may have the above-described ranges, respectively.

The gloss increase rate may be, for example, 14% or less, 13% or less, 12% or less, 11% or less, or 10% or less, and the lower limit may be, for example, 0.1% or more, 1% or more, or 5% or more.

In an embodiment of the present application, a cured layer having the above-described properties may be obtained through curing treatment for the composition having a predetermined composition. Specifically, the cured layer may include a cured product of the cured composition.

In one example, a treatment agent, that is, a coating composition, used in the present application, may be a photocurable solvent-free composition. That is, a solvent, for example, an organic solvent or aqueous solvent, may not be included in the composition. When a solvent-free composition is used, a drying process for the solvent may be omitted, so process efficiency may be increased. In addition, by the use of a solvent-free composition, it is possible to prevent the deterioration of the surface properties required for the film of the present application due to bubbles generated while a solvent is volatilized during the solvent drying process. Specifically, the composition may be a UV curable solvent-free composition, and include a reactive component (photocurable component) having a curable reactive group.

In one example, the cured layer may include a cured product of a composition including an oligomer component (A) and a monomer component (B). That is, after a photo-curing treatment is performed on the resin composition having a predetermined composition, a cured layer having a wrinkled surface, described above, may be prepared.

In one example, the reactive oligomer may be urethane (meth)acrylate. The urethane (meth)acrylate may function advantageously to ensure the strength of the cured layer, and the flexibility of the urethane cured layer through the unique elasticity of the urethane bond.

The urethane acrylate that can be used in the present application may be prepared by polymerizing compounds such as an isocyanate, an alcohol and an acrylate according to a known method to satisfy functionalities and/or molecular weights to be described below. For example, a urethane acrylate may be prepared by a method of reacting an acrylate including a hydroxyl group and three or more acryl groups in the molecule with a polyisocyanate having three or more isocyanate groups under a metal catalyst and a radical polymerization inhibitor until the isocyanate (NCO) disappears, and adding 0 to 30 wt% of a UV curable monomer. Alternatively, among commercially available products, a urethane acrylate that satisfies the following functionalities and/or molecular weights may be selected and used.

In one example, the urethane (meth)acrylate oligomer may have a weight average molecular weight (Mw) of 50,000 or less. For example, the molecular weight of the urethane (meth)acrylate may be 45,000 or less, 40,000 or less, 35,000 or less, or 30,000 or less, specifically, for example, 25,000 or less or 20,000 or less, and more specifically, for example, 19,000 or less, 18,000 or less, 17,000 or less, 16,000 or less, or 15,000 or less. In addition, the lower limit of the weight average molecular weight (Mw) of the urethane (meth)acrylate oligomer may be, for example, 1,000 or more, 2,000 or more, 3,000 or more, 4,000 or more, 5,000 or more, 6,000 or more, 7,000 or more, 8,000 or more, 9,000 or more, or 10,000 or more. When a urethane (meth)acrylate satisfying the above weight average molecular weight range is suitably used, it is possible to improve an elongation rate and ensure high hardness at the same time, and provide appropriate flexibility and durability to the cured layer.

In one example, the composition may include two or more urethane (meth)acrylate oligomers, which have different weight average molecular weights (Mw).

In one example, the composition may include a first urethane (meth)acrylate having a weight average molecular weight (Mw) of 10,000 to 30,000. Specifically, the lower limit of the molecular weight of the first urethane (meth)acrylate may be, for example, 11,000 or more, 12,000 or more, 13,000 or more, 14,000 or more, 15,000 or more, 16,000 or more, or 17,000 or more, and the upper limit thereof may be 25,000 or less, 24,000 or less, 23,000 or less, 22,000 or less, 21,000 or less, 20,000 or less, 19,000 or less, 18,000 or less, 17,000 or less, or 16,000 or less. When a urethane (meth)acrylate satisfying the above ranges is used, it may be advantageous in ensuring hardness and improving an elongation rate.

In one example, the composition may further include a urethane (meth)acrylate having a lower molecular weight than the first urethane (meth)acrylate. Specifically, the composition may include a second urethane (meth)acrylate having a weight average molecular weight (Mw) of less than 10,000, in addition to the first urethane (meth)acrylate having a weight average molecular weight (Mw) of 10,000 to 30,000.

The lower limit of the molecular weight of the second urethane (meth)acrylate may be, for example, 1,000 or more, and specifically, 1,500 or more, 2,000 or more, 2,500 or more, or 3,000 or more. In addition, the upper limit of the molecular weight thereof may be, for example, 9,000 or less or 8,000 or less, and more specifically, 5,000 or less, 4,500 or less, 4,000 or less, or 3,500 or less. When only the first urethane (meth)acrylate having a relatively high molecular weight is used, a curing density may decrease, and since the cured tissue is not dense, fouling resistance may be lowered. To compensate for this, the second urethane (meth)acrylate having a relatively low weight average molecular weight may be used. In addition, when only the second urethane (meth)acrylate having a low molecular weight is used, it may be disadvantageous in ensuring the above-described elongation rate, but in the present application, by using both the first and second urethane (meth)acrylates, it is possible to ensure an elongation rate, hardness and fouling resistance at the same time.

In one example, the urethane (meth)acrylate oligomer may include one or more photopolymerizable functional groups. Specifically, the urethane (meth)acrylate oligomer may be a monofunctional oligomer or a multifunctional oligomer having two or more functional groups. The number of functional groups of the multifunctional oligomer is not particularly limited, but considering an elongation rate and surface hardness, may be, for example, in a range of 6 to 10 or 6 to 9.

In one example, the composition may include two or more urethane (meth)acrylate oligomers having different numbers of functional groups.

In another example, the composition may include two or more multifunctional urethane (meth)acrylate oligomers having different numbers of functional groups.

In another example, the composition may include two or more multifunctional urethane (meth)acrylate oligomers having three or more functional groups.

In one example, the first urethane (meth)acrylate oligomer may have two or three or more functional groups. In an embodiment, the number of functional groups in the first urethane (meth)acrylate oligomer may be 6 to 10 or 6 to 9, and specifically, 6, 7, 8 or 9.

In one example, the second urethane (meth)acrylate oligomer may have two or three or more functional groups. In an embodiment, the number of functional groups in the first urethane (meth)acrylate oligomer may be 6 to 10 or 6 to 9, and specifically, 6, 7, 8 or 9.

In one example, the number of functional groups in the first urethane (meth)acrylate oligomer may be smaller than that of the second urethane (meth)acrylate oligomer. For example, when the number of functional groups in the first urethane (meth)acrylate oligomer is 6 to 10, the number of functional groups in the second urethane (meth)acrylate oligomer may be larger than that of the first urethane (meth)acrylate oligomer ranging from 6 to 10. As described above, when a urethane (meth)acrylate satisfies a predetermined number of functional groups and a predetermined number of molecular weights, a curing level may increase, and the effect of improving the elongation rate by securing a flow site may also be obtained at the same time. As a result, the use of the urethane acrylate described above may contribute to providing a film having excellent surface hardness, elongation rate and fouling resistance.

When the number of the functional groups and/or a molecular weight are satisfied as described above, the specific structure of a urethane (meth)acrylate oligomer is not particularly limited.

The composition may include 20 parts by weight to 70 parts by weight of a urethane (meth)acrylate oligomer with respect to 100 parts by weight of the sum of an oligomer component (A) and a monomer component (B).

In one example, the content ratio (w/1/w2) between the weight (w1) of the first urethane acrylate and the weight (w2) of the urethane acrylate may be 0.8 to 2.0. Specifically, the lower limit of the content ratio (w1/w2) may be, for example, 0.9 or more, 1.0 or more, 1.2 or more, 1.4 or more, 1.6 or more, or 1.8 or more, and the upper limit thereof may be, for example, 1.9 or less, 1.8 or less, 1.7 or less, 1.6 or less or 1.5 or less. The weight ratio may be suitably adjusted in consideration of excellent surface hardness, elongation rate and fouling resistance.

When the cured layer is mainly formed by photocuring of an oligomer, flexibility may be insufficient, and it may be disadvantageous in securing the above-described surface properties. Therefore, the composition includes a reactive monomer component in addition to the oligomer. In addition, the reactive monomer component may function as a type of solvent to lower the viscosity of the composition (compared to when only the oligomer component is included), thereby increasing coating processibility for a base layer.

In one example, as the reactive monomer component (B), a monofunctional or multifunctional monomer may be used. For example, the composition may include 30 parts by weight or more or 35 parts by weight or more of reactive monomer component (B) with respect to the sum of the oligomer component (A) and the monomer component (B). When the above range is satisfied, a reaction rate of the composition is increased, and a curing density is increased, which is advantageous in securing the above range of surface hardness.

The upper limit of the content of the reactive monomer component (B) may be suitably adjusted in consideration of the above-described effects of using a urethane (meth)acrylate. For example, the reactive monomer component (B) may be used at 80 parts by weight or less, 75 parts by weight or less, 70 parts by weight or less, 65 parts by weight or less, 60 parts by weight or less, 55 parts by weight or less, 50 parts by weight or less or 45 parts by weight or less with respect to 100 parts by weight of the sum of the oligomer component (A) and the monomer component (B).

In one example, the reactive monomer may be a (meth)acrylic monomer.

In one example, the reactive monomer may be a monomer (b-1) having a polar functional group such as a hydroxyl group, a nitrogen-containing functional group, or an alkylene oxide group. A monomer having a polar functional group is advantageous in increasing a curing reaction rate and a curing density. Specifically, the reactive monomer may be a (meth)acrylic monomer having a polar functional group.

Although not particularly limited, as a hydroxyl group-containing (meth)acrylic monomer, a hydroxyalkyl (meth)acrylate such as 2-hydroxyethyl (meth)acrylate, 2-hydroxypropyl (meth)acrylate, 4-hydroxybutyl (meth)acrylate, 6-hydroxyhexyl (meth)acrylate or 8-hydroxyoctyl (meth)acrylate may be used.

In the case of a nitrogen-containing functional group, as a functional group containing nitrogen in the molecule, for example, an amine group, an imine group, an amide group, a nitrile group, a nitro group, an azo group, an imide group or an azide group may be used, but the present invention is not limited thereto. In one example, when a (meth)acrylic monomer having a nitrogen-containing functional group is used, a specific type is not particularly limited, but, for example, (meth)acrylonitrile, N-methylacrylamide, (meth)acrylamide, alkyl (meth)acrylamide, dialkyl (meth)acrylamide, hydroxyalkyl (meth)acrylamide, N-butoxy methyl (meth)acrylamide, N-vinyl pyrrolidone, N-vinyl caprolactam, 2-aminoethyl (meth)acrylate, 3-aminoethyl (meth)acrylate, N,N-dimethylaminoethyl (meth)acrylate or N,N-dimethylaminopropyl (meth)acrylate may be used.

As a monomer having an alkylene oxide, for example, alkoxy alkylene glycol (meth)acrylic acid ester, alkoxy dialkylene glycol (meth)acrylic acid ester or alkoxy polyethylene glycol (meth)acrylic acid ester may be used, but the present invention is not particularly limited thereto.

In one example, a content of the reactive monomer (B) component included in the composition may be the same or higher than that of the first urethane (meth)acrylate. Specifically, a ratio (w3/w1) of the content (w3) of the reactive monomer (B) component to the content (w1) of the first urethane (meth)acrylate may be 1 to 3.0. When the composition satisfies the above content range, it is advantageous in ensuring proper coating processability, surface hardness according to an increase in curing density, and an excellent elongation rate at the same time.

In one example, a content of the reactive monomer (B) component included in the composition may be the same or higher than that of the second urethane (meth)acrylate. Specifically, a ratio (w3/w2) of the content (w3) of the reactive monomer (B) component to the content (w2) of the second urethane (meth)acrylate may be 1.5 to 2.5. When the composition satisfies the above content range, it is advantageous in ensuring proper coating processability, surface hardness according to an increase in curing density, and an excellent elongation rate at the same time.

In one example, the reactive monomer component (B) in the composition may further include a multifunctional monomer (b-2). Specifically, the composition may further include a monomer having two or more reactive functional groups. For example, a multifunctional (meth)acrylate monomer having two or more functional groups may be used. The multifunctional monomer increases curing strength to impart durability to the cured layer.

Although not particularly limited, as the multifunctional (meth)acrylate monomer, a bifunctional (meth)acrylate monomer such as cyclohexane dimethanol di(meth)acrylate, hexanediol di(meth)acrylate, tricyclodecane dimethanol di(meth)acrylate, triethylene glycol di(meth)acrylate, tetraethylene glycol di(meth)acrylate, butylene glycol di(meth)acrylate, polyethylene glycol di(meth)acrylate or polypropylene glycol di(meth)acrylate; a trifunctional (meth)acrylate monomer such as trimethylolpropane tri(meth)acrylate, glycerin tri(meth)acrylate, pentaerythritol tri(meth)acrylate, ethoxylated trimethylolpropane tri(meth)acrylate, propylated trimethylolpropane tri(meth)acrylate, glyceryl propylated tri(meth)acrylate, tris(2-hydroxyethyl)isocyanurate tri(meth)acrylate; a tetrafunctional (meth)acrylate monomer such as pentaerythritol tetra(meth)acrylate, ditrimethylolpropane tetra(meth)acrylate; a pentafunctional (meth)acrylate monomer such as dipentaerythritol penta(meth)acrylate, dipentaerythritol hydroxypenta(meth)acrylate; or a hexafunctional (meth)acrylate monomer such as dipentaerythritol hexa(meth)acrylate may be used.

The number of functional groups of the multifunctional monomer may be suitably selected in consideration of gloss. For example, if the number of functional groups is excessively high, the gloss may increase.

In one example, the number of functional groups of the multifunctional monomer component may be 2 to 5, 2 to 4, or 2 or 3.

As described above, when a reactive monomer, specifically, a reactive monomer having a polar functional group is used, it is advantageous in securing a curing density, but as the frequency of exposing a polar functional group at the surface of the cured layer, the problem of deteriorating fouling resistance may occur. Therefore, by using a predetermined amount of a component with a larger number of functional groups, such as multifunctional (meth)acrylate, it is possible to increase a curing density and prevent deterioration of fouling resistance by lowering the possibility of exposing a polar functional group at the surface of the cured layer. For example, the composition may include 5 parts by weight or more or 10 parts by weight or more of the multifunctional (meth)acrylate monomer with respect to 100 parts by weight of the sum of the oligomer component (A) and the monomer component (B).

In one example, the composition may include 15 parts by weight or less of the multifunctional (meth)acrylate monomer with respect to 100 parts by weight of the sum of the oligomer component (A) and the monomer component (B). Specifically, the content of the multifunctional (meth)acrylate monomer may be, for example, 14 parts by weight or less, 13 parts by weight or less, 12 parts by weight or less, 11 parts by weight or less, or 10 parts by weight or less. When the content of the multifunctional monomer exceeds the above range, due to increased viscosity, the coating processability of the cured composition may be poor, and due to an increased gloss of the cured layer, a desired matte characteristic may be poor.

The composition may further include an initiator (C). As long as it is an initiator that can be used in a curing process to be described below, the type of initiator is not particularly limited, and a known commercial product may also be used.

The content of an initiator is not particularly limited. For example, the composition may include 10 parts by weight or less of an initiator with respect to 100 parts by weight of the sum of the oligomer component (A) and the monomer component (B). Specifically, the content of the initiator may be 5 parts by weight or less, 4 parts by weight or less, 3 parts by weight or less, 2 parts by weight or less, or 1 part by weight or less. In addition, the lower limit of the content thereof may be, for example, 0.1 parts by weight or 0.5 parts by weight. As to be described below, since the cured layer of the present application undergoes stepwise curing, even with a small amount of the initiator, curing efficiency is excellent.

The composition may further include a photostabilizer (D). The type is not particularly limited as long as it can be used in the curing process to be described below, and a known commercial product can also be used.

The content of the photostabilizer is not particularly limited. For example, the composition may include 10 parts by weight or less of the photostabilizer with respect to 100 parts by weight of the sum of the oligomer component (A) and the monomer component (B). Specifically, the content of the photostabilizer may be 5 parts by weight or less, 4 parts by weight or less, 3 parts by weight or less, 2 parts by weight or less, or 1 part by weight or less. In addition, the lower limit of the content may be, for example, 0.1 parts by weight or 0.5 parts by weight. The photostabilizer may prevent damage to the laminate film by UV rays.

In one example, the composition for forming the cured layer may not include a matting agent component or include a low content thereof and used.

Specifically, the matting agent may have a particle shape, and provide a matte effect to the film by increasing the scattering rate of light from the surface of the film. However, the use of the matting agent leads to a problem of increased fouling resistance as described above. However, since the cured layer of the present invention has the above-described surface properties, the matte characteristic may be effectively realized. Therefore, a sufficient matte characteristic may be realized in the film of the present invention without using a matting agent used to realize a matte effect in the related art.

In addition, even when the matting agent is used, the amount of the matting agent used may not be as much as that used to implement a matte characteristic in the related art. That is, according to the present application, the content of the matting agent used may be significantly reduced. For example, with respect to 100 parts by weight of the sum of the oligomer component (A) and the monomer component (B), the content of the matting agent component may be 5 parts by weight or less, specifically, 4 parts by weight or less, 3 parts by weight or less, 2 parts by weight or less, or 1 part by weight or less. Accordingly, there is an advantage in that the film of the present application can prevent a problem of decreased fouling resistance due to the use of the matting agent.

In one example, the composition for forming a cured layer, which does not include a particle-shaped matting agent as an additive or uses as little of the matting agent as the above content may have a low viscosity, for example, a viscosity of 600 cps or less at room temperature. Specifically, when an excessive amount of a particle-shaped additive is used to realize a matte effect, the viscosity of the composition is increased, and thus the coating workability for the base layer is poor. However, in the present application, since the matting agent may not be used or may be used in an amount significantly less than that of the related art as described above, the composition for forming the cured layer may have a viscosity of 500 cps or less, 450 cps or less, 400 cps or less, 350 cps or less, 300 cps or less, or 250 cps or less at room temperature. The lower limit of the viscosity of the composition may be, for example, 150 cps or more, 200 cps or more, 250 cps or more, 300 cps or more, 350 cps or more, or 400 cps or more. Here, the room temperature means a temperature that is not particularly reduced or increased, for example, approximately 18 to 32 °C, specifically, 22 to 28 °C, 23 to 27 °C, or approximately 25 °C. In addition, the viscosity may be measured by a known method using a Brookfield viscometer.

When the above surface properties are satisfied, the thickness of the cured layer is not particularly limited. For example, the thickness of the cured layer may be 3 μm or more, 5 μm or more, 10 μm or more, or 15 μm or more, provided that the above surface properties are satisfied. In addition, for example, the thickness of the cured layer may be 100 μm or less, 90 μm or less, 80 μm or less, 70 μm or less, 60 μm or less, 50 μm or less, 40 μm or less, 30 μm or less, 20 μm or less, or 15 μm or less.

The type of the base layer to which the above composition is directly applied is not particularly limited. For example, the base layer may include polyvinyl chloride (PVC) or polyethylene terephthalate (PET). Although not particularly limited, considering the inhibition of a whitening phenomenon, a mechanical property such as impact resistance, the ease of processing and chemical resistance, it is preferable to use glycol-modified polyethylene terephthalate (PETG) among polyethylene terephthalates (PETs).

The thickness of the base layer is also not particularly limited. For example, the thickness of the base layer may be 50 μm or more, 100 μm or more, 150 μm or more, 200 μm or more, 250 μm or more, 300 μm or more, 350 μm or more, 400 μm or more, 450 μm or more, or 500 μm or more. In addition, for example, the thickness of the base layer may be 3,000 $\mu$m or less, 2,000 $\mu$m or less or 1,000 $\mu$m or less, and specifically, 900 $\mu$m or less, 800 $\mu$m or less, 700 $\mu$m or less, 600 $\mu$m or less, 500 $\mu$m or less, 400 $\mu$m or less, or 300 $\mu$m or less.

As described above, the present application may provide a laminate film which has excellent surface hardness and an excellent elongation rate, a soft texture, a matte characteristic and excellent fouling resistance. The laminate film having the above properties may be obtained by performing predetermined curing treatment to be described below on the composition with the above-described composition.

The above-described laminate film may be used for furniture or decorative materials with curves, edges and/or planes. Such furniture may include doors, desks, chairs and shelves, and the decorative materials may include items that can be used as part of the furniture or used alone.

In another aspect of the present application, the present application relates to a method of providing the laminate film. The method may include directly applying a photocurable composition including a photocurable oligomer component (A) and a reactive monomer component (B) on a base layer, and performing first and second curing processes.

The first curing and second curing may be referred to as a first light irradiation step and a second irradiation step, respectively, and these curing processes may be performed under the same or different conditions including the wavelength of irradiated light, a light irradiation amount, and/or a light irradiation time. Here, the first curing process is carried out under conditions that can form wrinkles while contracting the surface of the cured layer applied on the base layer. Specific conditions will be described below.

The specific composition of the composition applied on the base layer is as described above. In addition, the type or properties of the base layer are also as described above.

The method of applying the composition on the base layer is not particularly limited. For example, the composition may be applied on the base layer using a known method such as the Mayer's method, the D-bar method, or a method with a rubber roll, G/V roll, air knife or slot die.

The method includes a first light irradiation step of irradiating light (L1) of a relatively short wavelength to the composition applied on the base layer under an inert gas condition; and a second light irradiation step of irradiating light (L2) of a longer wavelength than the light (L1) under an air condition. Specifically, the method includes a first light irradiation step of forming wrinkles on the surface coated with a composition applied on the base layer by irradiating light (L1) of a predetermined wavelength to the composition under an inert gas condition; and a second irradiation step of forming a cured layer, which is a cured product of the composition, by irradiating light (L2) of a longer wavelength than the light (L1) under an air condition.

A device for irradiating light used in each step is not particularly limited, and for example, when light of 300 nm or less is applied in the first irradiation step, and light having a wavelength of 400 nm or less is applied in the second irradiation step, a known mercury or metal halide lamp may be used.

The first light irradiation step is a step of forming wrinkles by irradiating light to the composition coated on the base layer and contracting the surface of the composition (or a composition cured by light irradiation) coated with an excimer that has been generated by the irradiated light. The wrinkled surface may impart a matte characteristic by increasing the scattering of light incident on the surface. The wrinkled surface may have surface roughness and a gloss property as described above. Accordingly, in the present application, the matting agent may not be used, or even when the matting agent is used, it may be used in a significantly smaller content compared to the related art for realizing a matting effect.

In one example, in the first light irradiation step, high energy light having a wavelength of 300 nm or less, such as light having a wavelength of 200 nm or less, may be irradiated. Specifically, in the first light irradiation step, light having a wavelength of 130 nm or more, 140 nm or more, 150 nm or more, 160 nm or more, or 170 nm or more may be irradiated. In one example, the upper limit of the wavelength of the irradiated light in the first light irradiation step may be, for example, 200 nm or less, 190 nm or less, or 180 nm or less.

The first light irradiation step may be carried out in an inert atmosphere. A gas used to create the inert atmosphere may be, for example, He, Ne, Ar, and/or $N_2$.

In one example, the inert atmosphere in which the first light irradiation step is carried out may be an atmosphere in which an oxygen ($O_2$) concentration is approximately 4,000 ppm or less. Specifically, the upper limit of the oxygen concentration in the inert atmosphere may be 3,000 ppm or less, 2,500 or less, 2,000 ppm or less, 1,500 ppm or less or 1,000 ppm or less, and more specifically, 900 ppm or less, 800 ppm or less, 700 ppm or less, 600 ppm or less, 500 ppm or less, 400 ppm or less, or 300 ppm or less. In addition, the lower limit thereof may be, for example, 50 ppm or more, 100 ppm or more, 200 ppm or more, 300 ppm or more, 400 ppm or more, 500 ppm or more, 600 ppm or more, 700 ppm or more, 800 ppm or more, 900 ppm or more, or 1,000 ppm or more.

In one example, the inert atmosphere may be formed such that the oxygen concentration in nitrogen ($N_2$) gas satisfies the above range.

When the first light irradiation is performed under the inert atmosphere condition as described above, it is advantageous in securing the above-described wrinkles and surface properties. For example, when the first light irradiation is performed in the inert atmosphere in which the oxygen concentration exceeds the above range, it is difficult to form wrinkles as described above, and the above-described surface properties may not be provided. For example, wrinkles may not be evenly formed over the entire surface region in order to satisfy the above-described properties or may be hardly observed on the surface.

In one example, in the first light irradiation step, a distance between the composition and a light source, that is, a distance from the surface of the composition applied on the base layer to a light source may be 5 mm or more. Specifically, the lower limit of the distance may be, for example, 10 mm or more, 15 mm or more, 20 mm or more, 25 mm or more, 30 mm or more, 35 mm or more, 40 mm or more, 45 mm or more, or 50 mm or more, and the upper limit thereof may be, for example, 90 mm or less, 85 mm or less, 80 mm or less, 75 mm or less, 70 mm or less, 65 mm or less, 60 mm or less, 55 mm or less, or 50 mm or less. In the first light irradiation step, when the distance between the composition and the light source is adjusted within the above range, an appropriate amount of light may reach the composition with a proper intensity, and as a result, it is advantageous in forming a wrinkled surface with the above-described shape and size and securing the above-described levels of surface properties (e.g., surface roughness and gloss).

In one example, in the first light irradiation step, the amount of irradiated light may be 1 $mJ/cm^2$ or 5 $mJ/cm^2$ or more. Specifically, the lower limit of the light irradiation amount in the first light irradiation step may be, for example, 10 $mJ/cm^2$ or more, 15 $mJ/cm^2$ or more, 20 $mJ/cm^2$ or more, 25 $mJ/cm^2$ or more, or 30 $mJ/cm^2$ or more, and the upper limit thereof may be, for example, 100 $mJ/cm^2$ or less, 90 $mJ/cm^2$ or less, 80 $mJ/cm^2$ or less, 70 $mJ/cm^2$ or less, 60 $mJ/cm^2$ or less, 50 $mJ/cm^2$ or less, 40 $mJ/cm^2$ or less, 30 $mJ/cm^2$ or less, or 25 $mJ/cm^2$ or less. In the first light irradiation step, when the light irradiation amount is adjusted in the above range, it is advantageous in forming a wrinkled surface with the above-described shape and size and securing the above-described levels of surface properties (e.g., surface roughness and gloss).

In one example, in the first light irradiation step, the light irradiation time may be several seconds, and for example, the upper limit thereof may be 10 seconds or less or 5 seconds or less, and the lower limit thereof may be, for example, 0.5 seconds or more or 1 second or more. In the first light irradiation step, when the light irradiation time is adjusted within the above range, it is advantageous in forming a wrinkled surface with the above-described shape and size and securing the above-described levels of surface properties (e.g., surface roughness and gloss).

Here, the light irradiation time may be controlled by a method of adjusting the moving speed of the resin composition irradiated with light. For example, when the device of FIG. 6 is used, the light irradiation time may be controlled by suitably adjusting the moving speed of the base layer coated with the composition on a conveyer belt within a range of 1 to 50 m/min.

The second light irradiation step is a step of forming a cured layer by curing a coating composition by applying light energy having a different wavelength from the first light irradiation step to the coating composition which is coated on the base layer and has a wrinkled surface through the first light irradiation step.

In one example, in the second light irradiation step, light having a wavelength within the range of 200 to 400 nm may be irradiated. Specifically, the second light irradiation step may be a step of irradiating light having a wavelength of 210 nm or more, 220 nm or more, 230 nm or more, 240 nm or more, 250 nm or more, 260 nm or more, 270 nm or more, 280 nm or more, 290 nm or more, or 300 nm or more. The upper limit of the wavelength of the irradiated light in the second light irradiation step may be, for example, 350 nm or less, 340 nm or less, 330 nm or less, 320 nm or less, 310 nm or less, or 300 nm or less. The coating composition in which wrinkles are formed on its surface by curing to a certain level by the first light irradiation step may be cured in the (coated) thickness direction through the second light irradiation step of irradiating light having a relatively long wavelength.

In one example, the second irradiation step may be a step of irradiating light having a higher wavelength than the first irradiation step within the above-described wavelength range.

In the second light irradiation step, the surface temperature of the composition having a wrinkled surface through the first light irradiation step may be 100 °C or less. That is, the composition in which wrinkles are formed on its surface through the first light irradiation step may undergo the second light irradiation step under a condition that can maintain the surface temperature at 100 °C or less. The corresponding temperature condition may be appropriately applied by those of ordinary skill in the art. More specifically, the temperature may be, for example, 90 °C or less, 80 °C or less, or 70 °C or more, and the lower limit may be, for example, 10 °C or more, 20 °C or more, 30 °C or more, 40 °C or more, 50 °C or more, or 60 °C or more. When the temperature exceeds the above range, the durability of the base layer may deteriorate.

The second light irradiation step is carried out in an air atmosphere. The curing rate of the composition may be improved by an air atmosphere, and during irradiation, the effect of cleaning the surface of the cured layer may also be obtained by the conversion of oxygen ($O_2$) to ozone ($O_3$).

In one example, in the second light irradiation step, the distance between the composition and a light source, that is, the distance from the surface of the composition coated on the base layer to the light source may be, for example, 70 mm or less, for example, 60 mm or less, 50 mm or less, 40 mm or less, 30 mm or less, or 20 mm or less. Specifically, the upper limit of the distance may be, for example, 19 mm or less, 18 mm or less, 17 mm or less, 16 mm or less, 15 mm or less, 14 mm or less, 13 mm or less, 12 mm or less, 11 mm or less, or 10 mm or less, and the lower limit may be, for example, 0.5 mm or more, 1 mm or more, 2 mm or more, 3 mm or more, 4 mm or more, or 5 mm or more. In another example, in the second light irradiation step, the distance between the composition and a light source may be smaller than that in the first light irradiation step. In the second light irradiation step, when the distance between the composition and the light source is adjusted within the above range, it is advantageous in forming a wrinkled surface in the above-described shape and size, and securing the above-described levels of surface properties. When the distance is adjusted as described above, it is advantageous in forming the surface temperature of the composition in the range described above.

In one example, the amount of light irradiated in the second light irradiation step may be larger than that in the first light irradiation. For example, the amount of light irradiated in the second light irradiation step may be 150 mJ/cm$^2$ or more, and specifically, 160 mJ/cm$^2$ or more, 170 mJ/cm$^2$ or more, 180 mJ/cm$^2$ or more, 190 mJ/cm$^2$ or more, 200 mJ/cm$^2$ or more, 210 mJ/cm$^2$ or more, 220 mJ/cm$^2$ or more, 230 mJ/cm$^2$ or more, 240 mJ/cm$^2$ or more, 250 mJ/cm$^2$ or more, or 300 mJ/cm$^2$ or more. In addition, the upper limit may be, for example, 350 mJ/cm$^2$ or less, 340 mJ/cm$^2$ or less, 320 mJ/cm$^2$ or less, 310 mJ/cm$^2$ or less, or 300 mJ/cm$^2$ or less. During the second light irradiation, when the light irradiation amount is adjusted within the above range, it is advantageous in forming a wrinkled surface in the above-described shape and size, increasing the curing degree of the entire cured layer, and securing the above-described levels of surface properties (e.g., surface roughness and gloss).

In one example, the light irradiation time in the second light irradiation step may be the same or different from that in the first light irradiation step as described above. Specifically, the light irradiation time in the second light irradiation step may be several seconds, and for example, the upper limit thereof may be 10 seconds or less or 5 seconds or less, and the lower limit may be, for example, 0.5 seconds or more or 1 second or more.

When the first light irradiation and the second light irradiation are carried out as described above, the surface of the cured layer may have a relatively high curing density. Specifically, during the first light irradiation, light of a relatively high energy short wavelength (light of approximately 200 nm or less) acts in the vicinity of several hundred nm near the surface of the coated cured layer, and by the second light irradiation, the surface of the cured layer has a high curing density. However, since the light of a short wavelength used in the first light irradiation does not affect the inside of the cured layer, the curing density in the cured layer may be relatively low. Therefore, the interior of the cured layer with a relatively low curing density may contribute to securing flexibility (elongation rate), and the surface of the cured layer having a dense cured state may maintain clear wrinkles. Furthermore, the densely cured surface improves fouling resistance or solvent resistance. In addition, as a result, a densely cured surface with wrinkles is able to provide a soft texture and fouling resistance, to flexibly respond to a tensile force without losing surface properties.

In still another aspect of the present application, the present application relates to a decorative film or sheet which includes the laminate film. The decorative film may be used for decorative materials or furniture. The furniture or decorative materials may have a curve, a corner and/or a flat surface.

The furniture may include, for example, a door, a desk, a chair or a shelf, and the decorative materials may refer to materials encompassing materials that can be used as part of the furniture or used alone.

In yet another aspect of the present application, the present application relates to a coating agent, that is, a composition that can provide the above-described cured layer of the laminate film. The specific composition of the composition is as described above.

[Advantageous Effects]

According to one embodiment of the present application, a laminate film that not only has excellent surface properties such as a matte characteristic and fouling resistance but also an excellent elongation rate and excellent surface hardness, which are known as opposing properties in the related art, is provided.

In addition, according to one embodiment of the present application, a decorative sheet that is able to have excellent fouling resistance, implement a soft texture and a matte characteristic and maintain the above-described properties even when a tensile force for processing in actual use is applied is provided.

[Description of Drawings]

FIG. 1 is an image of the surface of a matte film prepared according to one embodiment of the present application.
FIG. 2 is an image of the surface of a matte film prepared according to the related art. Specifically, FIG. 2 is a photograph of the surface of the matte film prepared using a matting agent.
FIG. 3 illustrates wrinkles formed on the surface of a matte laminate prepared according to one embodiment of the present application. In FIG. 3, the colored dotted line is a marker for visually describing wrinkles (Wa and/or Wb).

FIG. 4 is a set of photographs of various shapes of surfaces of a laminate film prepared according to one embodiment of the present application.

FIG. 5 illustrates representative examples of surface irregularities of a cured layer formed according to one embodiment of the present application. FIG. 5A shows radially-formed wrinkles, FIG. 5B shows Y-shaped wrinkles, FIG. 5C shows sand wave-shaped wrinkles, and FIG. 5D shows tensioned-web-shaped wrinkles.

FIG. 6 schematically illustrates a device for performing curing according to one embodiment of the present application.

FIG. 7 shows a set of images of the surfaces of specimens in Examples (FIGS. 7A and 7B) and Comparative Examples (FIGS. 7C and 7D).

[Modes of the Invention]

Hereinafter, the present application will be described in detail with reference to Examples and Comparative Examples. However, the scope of the present application is not limited by the following examples.

**[Experimental Example 1]**

Examples 1 to 8

(1) Preparation of composition for forming cured layer

A composition that includes (I) a urethane (meth)acrylate oligomer, (II) a monofunctional (meth)acrylic monomer having an amide group or a hydroxyl group, (III) tricyclodecane dimethanol diacrylate (TCDDA), (IV) 1-hydroxycyclohexyl phenyl ketone as an initiator and (V) colloidal silica particles (particle diameter: 3 to 7 $\mu$m) in a component content ratio shown in Table 1 below was prepared.

Here, the oligomer component was adjusted such that a content ratio (W1/W2) of a first urethane (meth)acrylate oligomer (a weight average molecular weight of approximately 10,000 to 20,000, and the number of functional groups was 2 to 8) and a second urethane (meth)acrylate oligomer (a molecular weight of approximately 2,00 to 5,000, and the number of functional groups was larger than that of the first urethane (meth)acrylate) is 1 to 1.8.

[Table 1]

| Parts by weight | Example 1 | Example 2 | Example 3 | Example 4 | Example 5 | Example 6 | Example 7 | Example 8 |
|---|---|---|---|---|---|---|---|---|
| I | 50 | 50 | 50 | 60 | 70 | 80 | 50 | 50 |
| II | 40 | 45 | 35 | 40 | 30 | 20 | 40 | 40 |
| III | 10 | 5 | 15 | 10 | 10 | 10 | 10 | 10 |
| IV | 3 | 3 | 3 | 3 | 3 | 3 | 5 | 3 |
| V | 3 | 3 | 3 | 3 | 3 | 3 | 3 | 5 |

(2) Formation of cured layer

The composition prepared as described above was directly applied on a glycol-modified polyethylene terephthalate (PETG) base (width: approximately 15 cm, length: approximately 30 cm, thickness: approximately 300 to 500 $\mu$m), and fixed to a photocuring device having the same structure as shown in FIG. 6. Afterward, a laminate film having a cured layer formed on the base layer was prepared by performing stepwise light irradiation while moving the base at a moving speed of 20±1 m/min, as shown in Table 2 below.

[Table 2]

| First light irradiation | Wavelength range (nm) | 172 |
|---|---|---|
| | Irradiation amount (mJ/cm$^2$) | 18 |
| | Distance to light source (mm) | 50 |
| | Gas atmosphere | $N_2$ condition ($O_2$ 200ppm) |

(continued)

| Second light irradiation | Wavelength range (nm) | 200-400 |
| --- | --- | --- |
| | Irradiation amount (mJ/cm$^2$) | 280 |
| | Distance to light source (mm) | 2 |
| | Gas atmosphere | Air condition |

Comparative Example 1

A film was formed using the same conditions and process as in Example 1, except that a urethane (meth)acrylate oligomer (having 2 to 10 functional groups) having a weight average molecular weight of approximately 5,500 was used at 50 parts by weight, instead of the urethane (meth)acrylate oligomers used in Example 1.

Comparative Example 2

A film was formed using the same conditions and process as in Example 1, except that a urethane (meth)acrylate oligomer (having 2 to 10 functional groups) having a weight average molecular weight of approximately 3,200 was used at 50 parts by weight, instead of the urethane (meth)acrylate oligomers used in Example 1.

Comparative Example 3

A film was formed using the same conditions and process as in Example 1, except that a urethane (meth)acrylate oligomer (having 2 to 10 functional groups) having a weight average molecular weight of approximately 1,400 was used at 50 parts by weight, instead of the urethane (meth)acrylate oligomers used in Example 1.

Comparative Example 4

A film was formed using the same conditions and process as in Example 1, except that the ratio (w1/w2) of the first urethane (meth)acrylate oligomer and the second urethane (meth)acrylate oligomer used in Example 1 was changed to 2.5.

Comparative Example 5

A film was formed using the same conditions and process as in Example 1, except that the ratio (w1/w2) of the first urethane (meth)acrylate oligomer and the second urethane (meth)acrylate oligomer used in Example 1 was changed to 3.0.

(3) Evaluation

A surface hardness, an elongation rate, a surface roughness (Rz) and a 60° gloss (G) of the laminate film (base layer/cured layer) prepared as described above were measured according to the following methods. The measurement results are shown in Table 3.

*Surface hardness: The hardness of the laminate film was measured using a scratch tester (Erichsen scratch tester 413) according to ISO 4586-2. Specifically, a diamond tip mounted on the tester was moved on the film surface in a round shape (rotational speed: 5 times/min) under a load of 0 to 1 N, and the presence or absence of scratches on the film surface on which the tip moved was determined. Here, although, in the determination of the presence or absence of scratches, a condition for observing the presence or absence of scratches on the film, that is, the distance between an evaluator's eyes and the film, had not been officially determined, the laminate film was placed 10 cm in front of the evaluator's eyes and observed in a bright place under a fluorescent lamp to confirm a load that did not cause scratches.

*Elongation rate: A dog-bone specimen was prepared in accordance with the ASTM D638 method, and an elongation rate was evaluated. Here, the prepared specimen was left for approximately 1 minute at approximately 55 to 75 °C, and an elongation rate was evaluated.

*Surface roughness (Rz): The surface roughness (Rz) of the laminate film was measured based on ISO 4287.

*60° Gloss (G): The 60° gloss (gloss 60° condition) of the laminate film was measured using a gloss meter according to ASTM D2457.

[Table 3]

| | Hardness (N) (Scratch resistance) | Elongation rate (%) (Processability) | Surface roughness ($\mu$m) | 60° gloss |
|---|---|---|---|---|
| Example 1 | 0.5 | 18 | 3.8 | 4.5 |
| Example 2 | 0.5 | 16 | 3.4 | 4.8 |
| Example 3 | 0.3 | 19 | 3.6 | 4.7 |
| Example 4 | 0.5 | 16 | 3.6 | 4.8 |
| Example 5 | 0.7 | 15 | 3.8 | 5.1 |
| Example 6 | 0.7 | 15 | 4.0 | 5.5 |
| Example 7 | 0.5 | 16 | 4.2 | 4.2 |
| Example 8 | 0.5 | 16 | 4.3 | 4.1 |
| Comparative Example 1 | 0.5 | 14 | 4.2 | 5.7 |
| Comparative Example 2 | 0.7 | 11 | 4.2 | 5.8 |
| Comparative Example 3 | 0.9 | 8 | 4.3 | 6.1 |
| Comparative Example 4 | 0.2 | 25 | 3.2 | 5.9 |
| Comparative Example 5 | 0.1 | 30 | 2.7 | 6.3 |

As shown in Table 3, in Examples 1 to 3, the amount of oligomer was fixed and the proportion of the monomer was adjusted, in Example 2, the elongation rate was reduced while the hardness was maintained, and in Example 3, the hardness was reduced, but the elongation rate was increased. In Examples 4 to 6, the total content of oligomer was increased, and as the amount of oligomer was increased, the hardness was increased, the elongation rate was decreased, and the gloss was increased. In Examples 7 and 8, the amounts of initiator and colloidal silica were adjusted, and in both cases, while the hardness was maintained, the elongation rate was decreased. In Comparative Example 1, the oligomer having the largest molecular weight among the three Comparative Examples was used, the structure of the oligomer was unfavorable for maintaining the elongation rate, and the elongation rate was relatively decreased, in Comparative Example 2, compared to Comparative Example 1, since the oligomer having a smaller molecular weight was used, instead of increasing the hardness, the elongation rate was further decreased, and in Comparative Example 3, since the oligomer having the smallest molecular weight was used among the three Comparative Examples, the hardness was significantly increased, but the elongation rate was greatly reduced. In Comparative Examples 4 and 5, the ratio (w1/w2) of urethane(meth)acrylate oligomers was adjusted to 2.5 and 3, respectively, for the experiment. In this case, the elongation rate was increased by using an oligomer having a large molecular weight, but the hardness was significantly decreased.

**[Experimental Example 2]**

(1) Preparation of composition for forming cured layer

A composition (viscosity: approximately 300 cps) that included 50 parts by weight of an urethane (meth)acrylate oligomer, 40 parts by weight of the above described monofunctional (meth)acrylic monomer having a polar functional group (hydroxyl group or nitrogen-containing functional group), 10 parts by weight of hexanediol di(meth)acrylate, 3 parts by weight of 1-hydroxycyclohexyl phenyl ketone as an initiator and 3 parts by weight of colloidal silica particles (particle diameter: 3 to 7 $\mu$m) was prepared.

Here, for the oligomer components, the weight ratio (w1/w2) of a first urethane (meth)acrylate oligomer (a weight average molecular weight of approximately 10,000 to 20,000, and the number of functional groups was 2 to 10) and a second urethane (meth)acrylate oligomer (a molecular weight of approximately 2,000 to 5,000, and the number of functional groups was larger than that of the first urethane (meth)acrylate) was adjusted to 1 or more, for example, more than 1 to 1.8.

(2) Formation of cured layer

The composition prepared as described above was directly applied on a glycol-modified polyethylene terephthalate (PETG) base (width: 15 cm, length: 30 cm, thickness: 250 $\mu$m), and fixed to a photocuring device having the same structure as shown in FIG. 6. Afterward, a laminate film having a cured layer formed on the base layer was prepared by performing stepwise light irradiation while moving the base at a moving speed of $20\pm1$ m/min, as shown in Table 4 below.

[Table 4]

| | | Example 9 | Example 10 | Example 11 | Example 12 | Comparative Example 6 | Comparative Example 7 | Comparative Example 8 | Comparative Example 9 |
|---|---|---|---|---|---|---|---|---|---|
| First light irradiation | Wavelength range (nm) | 172 | 180 | 190 | 150 | not performed | 172 | not performed | not performed |
| | Irradiation amount (mJ/cm$^2$) | 18 | 15 | 16 | 17 | | 18 | | |
| | Distance to light source (mm) | 50 | 45 | 50 | 52 | | 50 | | |
| | Gas atmosphere | $N_2$ condition ($O_2$ 200ppm) | $N_2$ condition ($O_2$ 200ppm) | $N_2$ condition ($O_2$ 200ppm) | $N_2$ condition ($O_2$ 200ppm) | | $N_2$ condition ($O_2$ 200ppm) | | |
| Second light irradiation | Wavelength range (nm) | 220 | 250 | 300 | 380 | 200 | not performed | 100 | 500 |
| | Irradiation amount (mJ/cm$^2$) | 280 | 290 | 285 | 250 | 280 | | 280 | 280 |
| | Distance to light source (mm) | 2 | 2 | 1.5 | 2.5 | 2 | | 2 | 2 |
| | Gas atmosphere | Air condition | Air condition | Air condition | Air condition | Air condition | | Air condition | Air condition |

(3) Evaluation

A surface roughness (Rzl) and a 60° gloss (G1) of the laminate film (base layer/cured layer) prepared as described above were measured according to the following methods. Thereafter, the laminate film was left for approximately 1 minute at approximately 80 °C and subjected to 14% stretching, and its surface roughness (Rz2) and 60° gloss (G2) were measured again. Methods of measuring the surface roughness and gloss, and the stretching process are as follows, and the results are shown in Table 5. However, in Comparative Example 7, only surface curing slightly occurs, and it is impossible to perform the curing of the coating layer, and in Comparative Example 8, since the amount of light for secondary curing is too low to properly perform surface curing, the evaluation of physical properties cannot proceed. Therefore, the evaluation of these properties is excluded in Table 5 below.

*Surface roughness (Rz): The surface roughness (Rz) of the laminate film was measured based on ISO 4287.

*60° Gloss (G): The 60° gloss (gloss 60° condition) of the laminate film was measured using a gloss meter according to ASTM D2457.

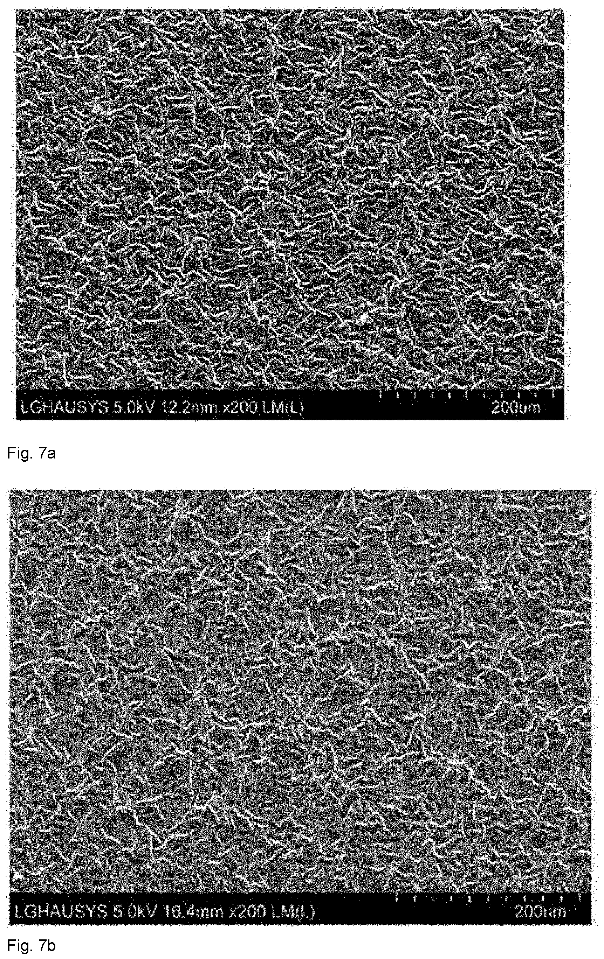

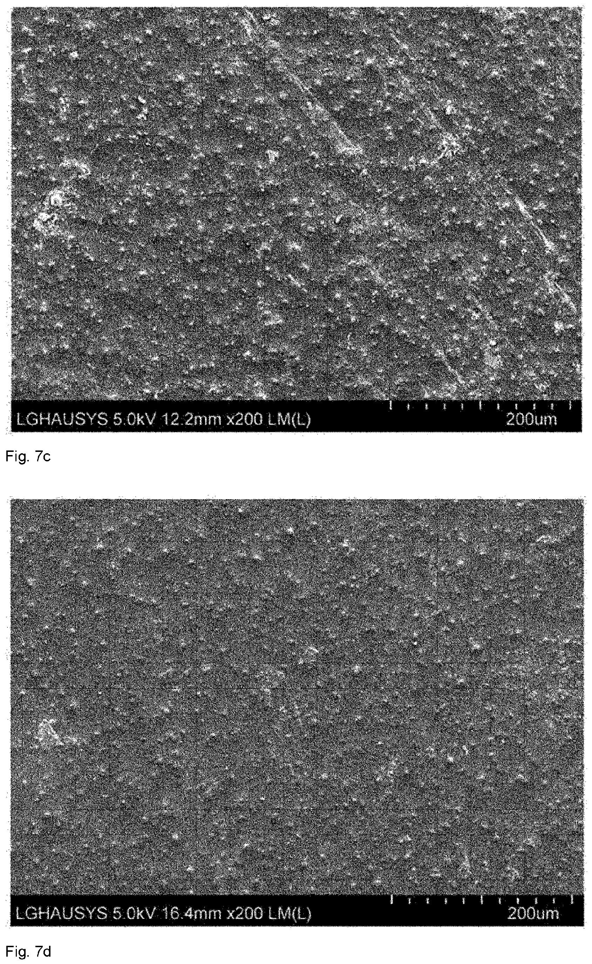

*Stretching: Refer to the ASTM D638 method. Specifically, using a high temperature tensioner, specimens prepared by cutting the sheets prepared in Examples and Comparative Examples in a dog-bone shape with a length of 120 mm and a width of 20 mm were stretched. Specifically, while a jig was kept at a distance of 100 mm and in a state where both ends of each specimen were fixed by 10 mm, using a high-temperature tensioner in which the temperature of an UTM chamber was maintained at $80 \pm 1$ °C, the tensioner was operated so that an elongation rate in the longitudinal direction was 14%. The surface shapes before and after stretching in Example 9 are shown in FIGS. 7A and 7C, respectively. In addition, the surface shapes before and after stretching in Comparative Example 6 are shown in FIGS. 7B and 7D, respectively.

[Table 5]

| | Surface roughness (Rz1) | Gloss (G1) | Surface roughness (Rz2) | Gloss (G2) | Surface roughness decrease rate | Gloss increase rate |
|---|---|---|---|---|---|---|
| Example 9 | 4.0 $\mu$m | 4.3 | 3.6 $\mu$m | 4.7 | 10% | 9.3% |
| Example 10 | 3.8 | 4.5 | 3.5 | 4.8 | 7.9% | 6.7% |
| Example 11 | 4.0 | 4.3 | 3.7 | 4.6 | 7.5% | 7.0% |
| Example 12 | 4.2 | 4.1 | 3.9 | 4.4 | 7.1% | 7.3% |
| Comparative Example 6 | 2.6 $\mu$m | 24 | 2.2 $\mu$m | 26 | 15.4% | 8.3% |
| Comparative Example 7 | - | - | - | - | - | - |
| Comparative Example 8 | - | - | - | - | - | - |
| Comparative Example 9 | 2.5 | 25 | 2.1 | 28 | 16% | 12% |

Comparing FIGS. 7A and 7C, even when the same treatment agent is used, the presence or absence of first light irradiation determines whether or not fine wrinkles are formed, and a surface gloss was changed by this phenomenon. In addition, referring to FIGS. 7A and 7B, it is possible to form an ultra-matte surface by forming fine wrinkles on the surface during the first light irradiation. In addition, since surface wrinkles are not easily stretched or flattened even after stretching, the rates of change in Rz and surface gloss are 15 or less compared to before stretching. As shown in Table 5, comparing Comparative Example 6 and Examples, when the first light irradiation is not performed, since there is no factor that is greatly changed after stretching, although the rates of change in roughness and gloss are low, it is difficult to form initial gloss to ultra-matte.

**[Experimental Example 3]**

In addition, the same experiment as described in Experimental Example 2 was performed for Examples 1 to 8 and Comparative Examples 1 to 5 of Experimental Example 1, and the results are shown in Table 6 below.

[Table 6]

| | Surface roughness (Rzl) | Gloss (G1) | Surface roughness (Rz2) | Gloss (G2) | Surface roughness decrease rate | Gloss increase rate |
|---|---|---|---|---|---|---|
| Example 1 | 3.8 | 4.5 | 3.6 | 4.8 | 5.5% | 6.7% |
| Example 2 | 3.4 | 4.8 | 3.2 | 5.1 | 5.8% | 6.3% |
| Example 3 | 3.6 | 4.7 | 3.3 | 5.2 | 8.3% | 10.7% |
| Example 4 | 3.6 | 4.8 | 3.3 | 5.1 | 8.3% | 6.3% |
| Example 5 | 3.8 | 5.1 | 3.6 | 5.4 | 5.2% | 5.9% |
| Example 6 | 4.0 | 5.5 | 3.8 | 5.7 | 5.0% | 3.6% |
| Example 7 | 4.2 | 4.2 | 3.9. | 4.5 | 7.1% | 7.1% |
| Example 8 | 4.3 | 4.1 | 4.0 | 4.4 | 7.0% | 7.3% |
| Comparative Example 1 | 4.2 | 5.7 | 3.5 | 6.5 | 16.6% | 13.8% |
| Comparative Example 2 | 4.2 | 5.8 | 3.4 | 6.6 | 19.0% | 13.8% |
| Comparative Example 3 | 4.3 | 6.1 | 3.4 | 7.0 | 20.9% | 14.8% |
| Comparative Example 4 | 3.2 | 5.9 | 2.8 | 7.0 | 12.5% | 18.6% |
| Comparative Example 5 | 2.7 | 6.3 | 2.4 | 7.5 | 11.1% | 19.0% |

As shown in Table 6, in Examples 1 to 3, the amount of oligomer was fixed and the proportion of the monomer was adjusted, in Example 2, the surface roughness decrease rate and gloss increase rate were similar to those of Example 1, and in Example 3, the surface roughness decrease rate and gloss increase rate showed a slight increase. In Examples 4 to 6, the total content of oligomer was increased, in Example 6, the surface roughness decrease rate and gloss increase rate were decreased, and Examples 7 and 8 showed higher values than those of Example 1. On the other hand, in Comparative Examples 1 to 3, three oligomers having different molecular weights were prescribed, and in all the three cases, the roughness decrease rate exceeded an appropriate range, and the gloss increase rate also sharply increased. In Comparative Examples 4 and 5, the ratios (w1/w2) of the urethane(meth)acrylate oligomers were adjusted to 2.5 and 3, respectively, for the experiment. In this case, the gloss increase rate exceeded an appropriate range, and the surface roughness decrease rate sharply increased.

[Description of Reference Numerals]

100: Light curing device
110: Light irradiation chamber
111: First light irradiator
112: Second light irradiator
120: Irradiated light
130: Conveyer belt
140: Gas diaphragm
150: Specimen

**Claims**

1. A laminate film, comprising:

   a base layer; and
   a cured layer located on at least one surface of the base layer and having a wrinkled surface,
   wherein the laminate film has a surface hardness of 0.3 N or more and an elongation rate of 15% or more,
   measured with respect to the wrinkled surface of the cured layer.

2. The film of claim 1, wherein the surface roughness decrease rate of the cured layer is 15% or less, calculated by Equation 1 below after the film is left for 1 minute at 80 °C and stretched 14% at 100 mm/min:

   [Equation 1]

   $$\text{Surface roughness decrease rate (\%)} = \{(Rz1\text{-}Rz2) \times 100\}/Rz1$$

3. The film of claim 2, wherein the gloss increase rate of the cured layer is 15% or less, calculated by Equation 2 below after the stretching:

   [Equation 2]

   $$\text{Gloss increase rate (\%)} = \{(G2\text{-} G1) \times 100\}/G1$$

   (G2 is a 60° gloss after stretching.)

4. The film of claim 1, wherein the surface roughness (Rzl) of the cured layer is in the range of 3.0 to 10 $\mu$m.

5. The film of claim 2, wherein, after stretching the film, the surface roughness (Rz2) of the cured layer is in the range of 3.0 to 10.0 $\mu$m and the 60° gloss (G2) thereof is in the range of 4.0 to 6.0.

6. The film of claim 1, wherein the surface of the cured layer has a 60° gloss (G) of 4.0 to 6.0.

7. The film of claim 1, wherein the cured layer is a cured product of a composition comprising an oligomer component (A) and a monomer component (B).

8. The film of claim 7, wherein the composition comprises a urethane (meth)acrylate oligomer having a weight average molecular weight (Mw) of 50,000 or less.

9. The film of claim 7, wherein the composition comprises two or more urethane (meth)acrylate oligomers having different weight average molecular weights (Mw) each other.

10. The film of claim 7, wherein the composition comprises any of hexa- to deca-functional urethane (meth)acrylate oligomers.

11. The film of claim 10, wherein the composition comprises two or more urethane (meth)acrylate oligomers having different numbers of functional groups each other.

12. The film of claim 11, wherein the composition comprises a first urethane (meth)acrylate having a weight average molecular weight (Mw) of 10,000 to 30,000 and a second urethane (meth)acrylate having a weight average molecular weight (Mw) of less than 10,000.

13. The film of claim 12, wherein the composition comprises 30 parts by weight or more of the monomer component (B) with respect to 100 parts by weight of the sum of the oligomer component (A) and the monomer component (B).

14. The film of claim 13, wherein the monomer component (B) comprises a (meth)acrylic monomer.

**15.** The film of claim 14, wherein the (meth)acrylic monomer has a hydroxyl group, an alkylene oxide group or a nitrogen-containing functional group.

**16.** The film of claim 7, wherein the composition further comprises a multifunctional monomer.

**17.** A decorative film comprising the laminate film of claim 1.

**18.** A method of preparing the laminate film of claim 1 which comprises a base layer and a cured layer, the method comprising:

a first light irradiation step of forming wrinkles on a surface coated with a composition applied on the base layer by irradiating light (L1) of a predetermined wavelength to the composition under an inert gas condition; and
a second irradiation step of forming a cured layer, which is a cured product of the composition, by irradiating light (L2) of a longer wavelength than the light (L1) under an air condition,
wherein the light (L2) has a wavelength of 200 to 400 nm.

Fig. 1

Fig. 2

LGHAUSYS 5.0kV 10.6mm x200 LM(UL)    200um

Fig. 3a

LGHAUSYS 5.0kV 8.0mm x200 LM(L)    200um

Fig. 3b

Fig. 4a

Fig. 4b

Fig. 4c

Fig. 4d

LGHAUSYS 5.0kV 9.4mm x200 LM(UL)          200um

Fig. 4e

LGHAUSYS 5.0kV 10.6mm x200 LM(UL)          200um

Fig. 4f

Fig. 4g

Fig. 4h

Fig. 4i

Fig. 4j

Fig. 4k

Fig. 5a

Fig. 5b

Fig. 5c

Fig. 5d

Fig. 6

Fig. 7a

Fig. 7b

Fig. 7c

Fig. 7d

<div align="center">**INTERNATIONAL SEARCH REPORT**</div>

| | |
|---|---|
| | International application No. |
| | **PCT/KR2020/013287** |

**A. CLASSIFICATION OF SUBJECT MATTER**

**C09D 5/28**(2006.01)i; **C09D 5/16**(2006.01)i; **C09D 175/14**(2006.01)i; **B05D 3/06**(2006.01)i; **B44C 5/04**(2006.01)i; **B44C 1/00**(2006.01)i

According to International Patent Classification (IPC) or to both national classification and IPC

**B. FIELDS SEARCHED**

Minimum documentation searched (classification system followed by classification symbols)

C09D 5/28; B32B 27/00; B32B 27/16; B32B 27/30; B32B 33/00; C08J 7/18; C09J 7/20; E04F 13/08; C09D 5/16; C09D 175/14; B05D 3/06; B44C 5/04; B44C 1/00

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 적층 필름(multilayer), 경화층(cured layer), 경화(curing), 주름(wrinkle), 표면 경도(surface hardness), 신율(elongation), 광 조사(photo irradiation)

**C. DOCUMENTS CONSIDERED TO BE RELEVANT**

| Category* | Citation of document, with indication, where appropriate, of the relevant passages | Relevant to claim No. |
|---|---|---|
| Y | JP 2000-326446 A (TOPPAN PRINTING CO., LTD.) 28 November 2000. See paragraphs [0014]-[0020], [0027], [0035] and [0057]; claims 1 and 4; and figures 2 and 4. | 1-18 |
| Y | JP 2015-091650 A (DAINIPPON PRINTING CO., LTD.) 14 May 2015. See paragraphs [0013]-[0019], [0024], [0066] and [0069]; and claim 1. | 1-18 |
| A | KR 10-2019-0012787 A (LG HAUSYS, LTD.) 11 February 2019. See paragraphs [0092] and [0093]; and claims 1-7 and 10. | 1-18 |
| A | JP 2006-231540 A (DAINIPPON PRINTING CO., LTD. et al.) 07 September 2006. See paragraph [0029]; claims 1-8; and figure 1. | 1-18 |

☑ Further documents are listed in the continuation of Box C.  ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **12 January 2021** | **13 January 2021** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

# EP 4 043 528 A1

<div align="center">

**INTERNATIONAL SEARCH REPORT**

</div>

| | | International application No. |
|---|---|---|
| | | **PCT/KR2020/013287** |

**C.    DOCUMENTS CONSIDERED TO BE RELEVANT**

| Category* | Citation of document, with indication, where appropriate, of the relevant passages | Relevant to claim No. |
|---|---|---|
| A | WO 2017-170246 A1 (NIPPON PAINT AUTOMOTIVE COATINGS CO., LTD.) 05 October 2017. See entire document. | 1-18 |

Form PCT/ISA/210 (second sheet) (July 2019)

INTERNATIONAL SEARCH REPORT
Information on patent family members

International application No.

**PCT/KR2020/013287**

| Patent document cited in search report | | | Publication date (day/month/year) | Patent family member(s) | | | Publication date (day/month/year) |
|---|---|---|---|---|---|---|---|
| JP | 2000-326446 | A | 28 November 2000 | None | | | |
| JP | 2015-091650 | A | 14 May 2015 | JP | 6350184 | B2 | 04 July 2018 |
| KR | 10-2019-0012787 | A | 11 February 2019 | KR | 10-2155036 | B1 | 11 September 2020 |
| JP | 2006-231540 | A | 07 September 2006 | JP | 4690071 | B2 | 01 June 2011 |
| WO | 2017-170246 | A1 | 05 October 2017 | CN | 108883614 | A | 23 November 2018 |
| | | | | EP | 3437858 | A1 | 06 February 2019 |
| | | | | JP | 6491394 | B2 | 27 March 2019 |

Form PCT/ISA/210 (patent family annex) (July 2019)

37